# EUROPEAN PATENT APPLICATION

(11) **EP 4 845 226 A1**
(43) Date of publication of application: **25.11.2026**
(21) Application number: 25751124.6
(22) Date of filing: 17.01.2025
(51) Int. Cl.: H04W 36/14

(54) **COMMUNICATION METHOD AND COMMUNICATION APPARATUS**

(30) Priority: 07.02.2024 CN 202410175890
(71) Applicant: Huawei Technologies Co., Ltd., Shenzhen, Guangdong 518129 (CN)
(72) Inventor: HU, Xiange, Shenzhen, Guangdong 518129 (CN); XU, Ling, Shenzhen, Guangdong 518129 (CN); YANG, Linping, Shenzhen, Guangdong 518129 (CN); FAN, Jing, Shenzhen, Guangdong 518129 (CN); WEN, Lutao, Shenzhen, Guangdong 518129 (CN)
(74) Representative: Huawei European IPR
(86) International application number: PCT/CN2025/072946
(87) International publication number: WO 2025/167522

(57) **Abstract**

This application provides a communication method, including: A terminal device performs emergency registration with a first network. The terminal device reselects to a second network from the first network. When performing an emergency service, the terminal device sends, to a mobility management network element of the second network, a request message for requesting emergency registration with the second network; and the second network enters an emergency registered state after receiving the request message for requesting the emergency registration. When not performing an emergency service, the terminal device sends, to a mobility management network element of the second network, a request message for requesting initial registration with the second network; and the second network enters a non-emergency registered state after receiving the request message for requesting the initial registration. In this way, a registration state match between the second network and the terminal device is achieved.

## Description

This application claims priority to Chinese Patent Application No. 202410175890.3, filed with the China National Intellectual Property Administration on February 7, 2024 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A long term evolution (long term evolution, LTE) network and a 5th generation (5th generation, 5G) or a new radio (new radio, NR) network is interoperable with each other. When user equipment (user equipment, UE) triggers emergency registration in the LTE network, the UE is in an emergency registered state (that is, the UE has established an emergency packet data network (packet data network, PDN) session). In this case, the UE can only initiate emergency services and cannot initiate normal services (which may also be understood as non-emergency services). During interoperation between the LTE network and the 5G network or between the LTE network and the NR network, it is clearly specified in protocols that if a PDN on the LTE network cannot be mapped to the 5G network or NR network, the UE can locally release the PDN session. In addition, if the UE is in the emergency registered state, the UE can leave the emergency registered state only after T3512 expires.

When the UE reselects to the 5G network or the NR network from the LTE network, the UE is still in the emergency registered state but has no emergency packet data unit (packet data unit, PDU) bearer. When the UE does not have an emergency PDU bearer, the UE cannot receive paging for emergency calls from a network side. In this case, normal services cannot be initiated, and paging for emergency services cannot be received. If the UE remains in the emergency registered state, user experience is affected. In addition, if the LTE network and the NR network or the LTE network and the 5G network cannot communicate with each other, for example, the NR network or the 5G network may be in a non-emergency registered state, but the UE is in the emergency registered state, resulting in a registration state mismatch between the network side and the UE.

### SUMMARY

This application provides a communication method, to resolve a registration state mismatch between a network side and a terminal device.

According to a first aspect, a communication method is provided. The method is performed by a terminal device. The terminal device herein may be the terminal device itself, or may be a processor, a module, a chip, a chip system, or the like in the terminal device that implements the method. The method includes: performing emergency registration with a first network; reselecting to a second network from the first network; and sending a first request message or a second request message to a first mobility management network element, where the first mobility management network element is in the second network, the first request message is used to request emergency registration with the second network, and the second request message is used to request initial registration with the second network.

Specifically, when the first network is an LTE network, that the terminal device performs emergency registration with the first network may be understood as that the terminal device performs emergency attach to the first network, that is, "emergency registration" may be understood as "emergency attach". For example, the terminal device sends an attach request (Attach Request) message to a mobility management network element (for example, a mobility management entity MME network element) of the LTE network, and then the terminal device performs emergency attach to the first network (the LTE network).

It should be understood that, for specific descriptions of the emergency attach procedure, refer to the conventional technology. Details are not described herein.

Correspondingly, the first request message may be an emergency attach request message, and the second request message may be an attach request message. It should be understood that a message name is not limited in this embodiment of this application.

Specifically, when the first network is an NR network or a 5G network, that the terminal device performs emergency registration with the first network may be understood as that the terminal device performs emergency registration with the first network. For example, the terminal device sends an emergency registration request (Registration Request) message to a mobility management network element (for example, an access and mobility management function AMF network element) of the NR network or the 5G network, and then the terminal device performs emergency registration with the first network (the 5G network or the NR network).

Correspondingly, the first request message may be an emergency registration request message, and the second request message may be an initial registration request message. It should be understood that a message name is not limited in this embodiment of this application.

It should be understood that for specific descriptions of the emergency registration procedure, refer to the conventional technology. Details are not described herein.

According to the foregoing technical solution, when performing an emergency service, the terminal device sends, to a mobility management network element of the second network, a request message for requesting emergency registration with the second network; and the second network enters an emergency registered state after receiving the request message for requesting the emergency registration. When not performing an emergency service, the terminal device sends, to a mobility management network element of the second network (namely, the first mobility management network element), a request message for requesting initial registration with the second network; and the second network enters a non-emergency registered state after receiving the request message for requesting the initial registration. In this way, a registration state match between the second network and the terminal device is achieved.

With reference to the first aspect, in some implementations of the first aspect, the sending the first request message or the second request message to the first mobility management network element includes: sending the first request message or the second request message to the first mobility management network element when the first network and the second network cannot communicate with each other. According to the foregoing technical solution, a registration state mismatch between a network side and a terminal device can be resolved.

With reference to the first aspect, in some implementations of the first aspect, that the first network and the second network cannot communicate with each other includes: the second network is not equivalent to the first network; or there is no communication interface between the first mobility management network element and a mobility management network element of the first network. According to the foregoing technical solution, a registration state mismatch between a network side and a terminal device can be resolved.

With reference to the first aspect, in some implementations of the first aspect, the sending the first request message or the second request message to the first mobility management network element includes: sending the first request message to the first mobility management network element when the terminal device performs an emergency service. According to the foregoing technical solution, a registration state mismatch between a network side and a terminal device can be resolved.

With reference to the first aspect, in some implementations of the first aspect, the sending the first request message or the second request message to the first mobility management network element includes: sending the second request message to the first mobility management network element when the terminal device does not perform an emergency service. According to the foregoing technical solution, a registration state mismatch between a network side and a terminal device can be resolved.

With reference to the first aspect, in some implementations of the first aspect, before the sending the first request message or the second request message to the first mobility management network element, the method further includes: entering a deregistered state. According to the foregoing technical solution, a registration state mismatch between a network side and a terminal device can be resolved.

With reference to the first aspect, in some implementations of the first aspect, the first network and the second network are different PLMNs. According to the foregoing technical solution, a registration state mismatch between a network side and a terminal device can be resolved.

With reference to the first aspect, in some implementations of the first aspect, the first network and the second network are a same PLMN of different access technologies, and the access technology includes any one of the following: an LTE system, a 5G system, or an NR system. According to the foregoing technical solution, a registration state mismatch between a network side and a terminal device can be resolved.

According to a second aspect, a communication method is provided. The method is performed by a terminal device. The terminal device herein may be the terminal device itself, or may be a processor, a module, a chip, a chip system, or the like in the terminal device that implements the method. The method includes: performing emergency registration with a first network; reselecting to a second network from the first network; obtaining first indication information, where the first indication information indicates a terminal device to enter a non-emergency registered state; and determining, based on the first indication information, to send a third request message to a first mobility management network element, where the first mobility management network element is in the second network, and the third request message is used to request initial registration with the second network.

Specifically, when the first network is an LTE network, that the terminal device performs emergency registration with the first network may be understood as that the terminal device performs emergency attach to the first network, that is, "emergency registration" may be understood as "emergency attach". For example, the terminal device sends an attach request (Attach Request) message to a mobility management network element (for example, a mobility management entity MME network element) of the LTE network, and then the terminal device performs emergency attach to the first network (the LTE network).

It should be understood that, for specific descriptions of the emergency attach procedure, refer to the conventional technology. Details are not described herein.

Correspondingly, the first request message may be an emergency attach request message, and the second request message may be an attach request message. It should be understood that a message name is not limited in this embodiment of this application.

Specifically, when the first network is an NR network or a 5G network, that the terminal device performs emergency registration with the first network may be understood as that the terminal device performs emergency registration with the first network. For example, the terminal device sends an emergency registration request (Registration Request) message to a mobility management network element (for example, an access and mobility management function AMF network element) of the NR network or the 5G network, and then the terminal device performs emergency registration with the first network (the 5G network or the NR network).

Correspondingly, the first request message may be an emergency registration request message, and the second request message may be an initial registration request message. It should be understood that a message name is not limited in this embodiment of this application.

It should be understood that for specific descriptions of the emergency registration procedure, refer to the conventional technology. Details are not described herein.

According to the foregoing technical solution, the terminal device obtains the first indication information, where the first indication information indicates the terminal device to enter the non-emergency registered state, and the terminal device initiates the initial registration procedure to the second network based on the first indication information, to achieve a state match between the terminal device and the second network.

With reference to the second aspect, in some implementations of the second aspect, before the obtaining the first indication information, the method further includes: sending a fourth request message to the first mobility management network element, where the fourth request message is used to request mobility registration with the second network; and the obtaining the first indication information includes: receiving a first response message from the first mobility management network element, where the first response message includes the first indication information. According to the foregoing technical solution, a registration state mismatch between a network side and a terminal device can be resolved.

Specifically, when an access technology of the second network is an NR system or a 5G system, the fourth request message may be a mobility registration request message, and the first response message may be a mobility registration accept message.

Specifically, when an access technology of the second network is an LTE system, the fourth request message may be a tracking area update request message, the first response message may be a tracking area update accept message, and the session management context may be a PDN session.

With reference to the second aspect, in some implementations of the second aspect, the first network and the second network are different PLMNs. According to the foregoing technical solution, a registration state mismatch between a network side and a terminal device can be resolved.

With reference to the second aspect, in some implementations of the second aspect, the first network and the second network are a same PLMN of different access technologies, and the access technology includes any one of the following: an LTE system, a 5G system, or an NR system. According to the foregoing technical solution, a registration state mismatch between a network side and a terminal device can be resolved.

According to a third aspect, a communication method is provided. The method is performed by a terminal device. The terminal device herein may be the terminal device itself, or may be a processor, a module, a chip, a chip system, or the like in the terminal device that implements the method. The method includes: performing emergency registration with a first network; reselecting to a second network from the first network; and sending a fifth request message to a first mobility management network element, where the first mobility management network element is in the second network, the fifth request message is used to request mobility to the second network, the fifth request message includes second indication information, and the second indication information indicates that a registration status of the terminal device is an emergency registered state.

Specifically, when the first network is an LTE network, that the terminal device performs emergency registration with the first network may be understood as that the terminal device performs emergency attach to the first network, that is, "emergency registration" may be understood as "emergency attach". For example, the terminal device sends an attach request (Attach Request) message to a mobility management network element (for example, a mobility management entity MME network element) of the LTE network, and then the terminal device performs emergency attach to the first network (the LTE network).

It should be understood that, for specific descriptions of the emergency attach procedure, refer to the conventional technology. Details are not described herein.

Correspondingly, the first request message may be an emergency attach request message, and the second request message may be an attach request message. It should be understood that a message name is not limited in this embodiment of this application.

Specifically, when the first network is an NR network or a 5G network, that the terminal device performs emergency registration with the first network may be understood as that the terminal device performs emergency registration with the first network. For example, the terminal device sends an emergency registration request (Registration Request) message to a mobility management network element (for example, an access and mobility management function AMF network element) of the NR network or the 5G network, and then the terminal device performs emergency registration with the first network (the 5G network or the NR network).

It should be understood that for specific descriptions of the emergency registration procedure, refer to the conventional technology. Details are not described herein.

Correspondingly, the first request message may be an emergency registration request message, and the second request message may be an initial registration request message. It should be understood that a message name is not limited in this embodiment of this application.

According to the foregoing technical solution, the terminal device sends second indication information to a mobility management network element of the second network, where the second indication information indicates that the terminal device is in the emergency registered state, and the second network determines, based on the second indication information, to enter the emergency registered state, to achieve a registration state match between the network side and the terminal device.

With reference to the third aspect, in some implementations of the third aspect, that the fifth request message includes the second indication information includes: The fifth request message includes the second indication information when the first network and the second network cannot communicate with each other. According to the foregoing technical solution, a registration state mismatch between a network side and a terminal device can be resolved.

With reference to the third aspect, in some implementations of the third aspect, that the first network and the second network cannot communicate with each other includes: The second network is not equivalent to the first network; or there is no communication interface between the first mobility management network element and a mobility management network element of the first network. According to the foregoing technical solution, a registration state mismatch between a network side and a terminal device can be resolved.

With reference to the third aspect, in some implementations of the third aspect, the method further includes: receiving third indication information from the first mobility management network element, where the third indication information indicates that the second network is in the emergency registered state. According to the foregoing technical solution, a registration state mismatch between a network side and a terminal device can be resolved.

With reference to the third aspect, in some implementations of the third aspect, the first network and the second network are different PLMNs. According to the foregoing technical solution, a registration state mismatch between a network side and a terminal device can be resolved.

With reference to the third aspect, in some implementations of the third aspect, the first network and the second network are a same PLMN of different access technologies, and the access technology includes any one of the following: an LTE system, a 5G system, or an NR system. According to the foregoing technical solution, a registration state mismatch between a network side and a terminal device can be resolved.

According to a fourth aspect, a communication method is provided. The method is performed by a terminal device. The terminal device herein may be the terminal device itself, or may be a processor, a module, a chip, a chip system, or the like in the terminal device that implements the method. The method includes: performing emergency registration with a first network; and disabling an access technology capability of a second network when a session management context of the first network cannot be migrated to the second network, where the access technology capability includes any one of the following: an LTE capability, an NR capability, or a 5G capability.

Specifically, when the first network is an LTE network, that the terminal device performs emergency registration with the first network may be understood as that the terminal device performs emergency attach to the first network, that is, "emergency registration" may be understood as "emergency attach". For example, the terminal device sends an attach request (Attach Request) message to a mobility management network element (for example, a mobility management entity MME network element) of the LTE network, and then the terminal device performs emergency attach to the first network (the LTE network).

It should be understood that, for specific descriptions of the emergency attach procedure, refer to the conventional technology. Details are not described herein.

Specifically, when the first network is an NR network or a 5G network, that the terminal device performs emergency registration with the first network may be understood as that the terminal device performs emergency registration with the first network. For example, the terminal device sends an emergency registration request (Registration Request) message to a mobility management network element (for example, an access and mobility management function AMF network element) of the NR network or the 5G network, and then the terminal device performs emergency registration with the first network (the 5G network or the NR network).

It should be understood that for specific descriptions of the emergency registration procedure, refer to the conventional technology. Details are not described herein.

According to the foregoing technical solution, the terminal device disables the access technology capability of the second network based on the fact that the session management context of the first network cannot be migrated to the second network, to achieve a state match between the terminal device and a network side.

With reference to the fourth aspect, in some implementations of the fourth aspect, that the session management context of the first network cannot be migrated to the second network includes: The second network is not equivalent to the first network; or there is no communication interface between a first mobility management network element and a mobility management network element of the first network. According to the foregoing technical solution, a registration state mismatch between a network side and a terminal device can be resolved.

With reference to the fourth aspect, in some implementations of the fourth aspect, the disabling the access technology capability of the second network includes: disabling the LTE capability when an access technology of the second network is an LTE system; or disabling the NR capability or the 5G capability when an access technology of the second network is an NR system or a 5G system. According to the foregoing technical solution, a registration state mismatch between a network side and a terminal device can be resolved.

With reference to the fourth aspect, in some implementations of the fourth aspect, the method further includes: enabling the access technology capability of the second network when determining that an emergency service ends. According to the foregoing technical solution, a registration state mismatch between a network side and a terminal device can be resolved.

With reference to the fourth aspect, in some implementations of the fourth aspect, the first network and the second network are different PLMNs. According to the foregoing technical solution, a registration state mismatch between a network side and a terminal device can be resolved.

With reference to the fourth aspect, in some implementations of the fourth aspect, the first network and the second network are a same PLMN of different access technologies, and the access technology includes any one of the following: an LTE system, a 5G system, or an NR system. According to the foregoing technical solution, a registration state mismatch between a network side and a terminal device can be resolved.

According to a fifth aspect, a communication method is provided. The method is performed by a first mobility management network element. The first mobility management network element herein may be the first mobility management network element itself, or may refer to a processor, a module, a chip, a chip system, or the like in the first mobility management network element that implements the method. The method includes: receiving a fourth request message from a terminal device, where the fourth request message is used to request mobility registration with a second network; sending a first response message to the terminal device, where the first response message includes first indication information, and the first indication information indicates the terminal device to enter a non-emergency registered state; and receiving a third request message from the terminal device, where the third request message is used to request initial registration with the second network.

Specifically, when an access technology of the second network is an NR system or a 5G system, the fourth request message may be a mobility registration request message, and the first response message may be a mobility registration accept message.

Specifically, when an access technology of the second network is an LTE system, the fourth request message may be a tracking area update request message, the first response message may be a tracking area update accept message, and the session management context may be a PDN session.

With reference to the fifth aspect, in some implementations of the fifth aspect, the method further includes: sending a second response message to the terminal device, where the second response message indicates that the initial registration with the second network succeeds. According to the foregoing technical solution, a registration state mismatch between a network side and a terminal device can be resolved.

According to a sixth aspect, a communication method is provided. The method is performed by a first mobility management network element. The first mobility management network element herein may be the first mobility management network element itself, or may refer to a processor, a module, a chip, a chip system, or the like in the first mobility management network element that implements the method. The method includes: receiving a fifth request message from a terminal device, where the fifth request message is used to request mobility to a second network, the fifth request message includes second indication information, and the second indication information indicates that a registration status of the terminal device is an emergency registered state; and determining, based on the second indication information, that the second network enters the emergency registered state.

With reference to the sixth aspect, in some implementations of the sixth aspect, the method further includes: sending third indication information to the terminal device, where the third indication information indicates that the second network is in the emergency registered state. According to the foregoing technical solution, a registration state mismatch between a network side and a terminal device can be resolved.

According to a seventh aspect, a communication apparatus is provided, including: a processing unit, configured to perform emergency registration with a first network, where the processing unit is configured to reselect to a second network from the first network; and a transceiver unit, configured to send a first request message or a second request message to a first mobility management network element, where the first mobility management network element is in the second network, the first request message is used to request emergency registration with the second network, and the second request message is used to request initial registration with the second network.

With reference to the seventh aspect, in some implementations of the seventh aspect, the transceiver unit is specifically configured to send the first request message or the second request message to the first mobility management network element when the first network and the second network cannot communicate with each other.

With reference to the seventh aspect, in some implementations of the seventh aspect, that the first network and the second network cannot communicate with each other includes: The second network is not equivalent to the first network; or there is no communication interface between the first mobility management network element and a mobility management network element of the first network.

With reference to the seventh aspect, in some implementations of the seventh aspect, the transceiver unit is specifically configured to send the first request message to the first mobility management network element when the terminal device performs an emergency service.

With reference to the seventh aspect, in some implementations of the seventh aspect, the transceiver unit is specifically configured to send the second request message to the first mobility management network element when the terminal device does not perform an emergency service.

With reference to the seventh aspect, in some implementations of the seventh aspect, before sending the first request message or the second request message to the first mobility management network element, the transceiver unit is further configured to enter a deregistered state.

With reference to the seventh aspect, in some implementations of the seventh aspect, the first network and the second network are different PLMNs.

With reference to the seventh aspect, in some implementations of the seventh aspect, the first network and the second network are a same PLMN of different access technologies, and the access technology includes any one of the following: an LTE system, a 5G system, or an NR system.

According to an eighth aspect, a communication apparatus is provided, including: a processing unit, configured to perform emergency registration with a first network, where the processing unit is configured to reselect to a second network from the first network; and a transceiver unit, configured to obtain first indication information, where the first indication information indicates a terminal device to enter a non-emergency registered state; and the transceiver unit is configured to determine, based on the first indication information, to send a third request message to a first mobility management network element, where the first mobility management network element is in the second network, and the third request message is used to request initial registration with the second network.

With reference to the eighth aspect, in some implementations of the eighth aspect, before obtaining the first indication information, the transceiver unit is further configured to send a fourth request message to the first mobility management network element, where the fourth request message is used to request mobility registration with the second network; and the transceiver unit is specifically configured to receive a first response message from the first mobility management network element, where the first response message includes the first indication information.

With reference to the eighth aspect, in some implementations of the eighth aspect, the first network and the second network are different PLMNs.

With reference to the eighth aspect, in some implementations of the eighth aspect, the first network and the second network are a same PLMN of different access technologies, and the access technology includes any one of the following: an LTE system, a 5G system, or an NR system.

According to a ninth aspect, a communication apparatus is provided, including: a processing unit, configured to perform emergency registration with a first network, where the processing unit is configured to reselect to a second network from the first network; and a transceiver unit, configured to send a fifth request message to a first mobility management network element, where the first mobility management network element is in the second network, the fifth request message is used to request mobility to the second network, the fifth request message includes second indication information, and the second indication information indicates that a registration status of the terminal device is an emergency registered state.

With reference to the ninth aspect, in some implementations of the ninth aspect, that the fifth request message includes the second indication information includes: The fifth request message includes the second indication information when the first network and the second network cannot communicate with each other.

With reference to the ninth aspect, in some implementations of the ninth aspect, that the first network and the second network cannot communicate with each other includes: The second network is not equivalent to the first network; or there is no communication interface between the first mobility management network element and a mobility management network element of the first network.

With reference to the ninth aspect, in some implementations of the ninth aspect, the transceiver unit is further configured to receive third indication information from the first mobility management network element, where the third indication information indicates that the second network is in the emergency registered state.

With reference to the ninth aspect, in some implementations of the ninth aspect, the first network and the second network are different PLMNs.

With reference to the ninth aspect, in some implementations of the ninth aspect, the first network and the second network are a same PLMN of different access technologies, and the access technology includes any one of the following: an LTE system, a 5G system, or an NR system.

According to a tenth aspect, a communication apparatus is provided, including: a processing unit, configured to perform emergency registration with a first network. The processing unit is configured to disable an access technology capability of a second network when a session management context of the first network cannot be migrated to the second network, where the access technology capability includes any one of the following: an LTE capability, an NR capability, or a 5G capability.

With reference to the tenth aspect, in some implementations of the tenth aspect, that the session management context of the first network cannot be migrated to the second network includes: The second network is not equivalent to the first network; or there is no communication interface between a first mobility management network element and a mobility management network element of the first network.

With reference to the tenth aspect, in some implementations of the tenth aspect, the processing unit is specifically configured to: disable the LTE capability when an access technology of the second network is an LTE system; or disable the NR capability or the 5G capability when an access technology of the second network is an NR system or a 5G system.

With reference to the tenth aspect, in some implementations of the tenth aspect, the processing unit is further configured to enable the access technology capability of the second network when determining that an emergency service ends.

With reference to the tenth aspect, in some implementations of the tenth aspect, the first network and the second network are different PLMNs.

With reference to the tenth aspect, in some implementations of the tenth aspect, the first network and the second network are a same PLMN of different access technologies, and the access technology includes any one of the following: an LTE system, a 5G system, or an NR system.

According to an eleventh aspect, a communication apparatus is provided, including: a transceiver unit, configured to receive a fourth request message from a terminal device, where the fourth request message is used to request mobility registration with a second network. The transceiver unit is configured to send a first response message to the terminal device, where the first response message includes first indication information, and the first indication information indicates the terminal device to enter a non-emergency registered state. The transceiver unit is configured to receive a third request message from the terminal device, where the third request message is used to request initial registration with the second network.

With reference to the eleventh aspect, in some implementations of the eleventh aspect, the transceiver unit is further configured to send a second response message to the terminal device, where the second response message indicates that the initial registration with the second network succeeds.

According to a twelfth aspect, a communication apparatus is provided, including: a transceiver unit, configured to receive a fifth request message from a terminal device, where the fifth request message is used to request mobility to a second network, the fifth request message includes second indication information, and the second indication information indicates that a registration status of the terminal device is an emergency registered state; and a processing unit, configured to determine, based on the second indication information, that the second network enters the emergency registered state.

With reference to the twelfth aspect, in some implementations of the twelfth aspect, the transceiver unit is further configured to send third indication information to the terminal device, where the third indication information indicates that the second network is in the emergency registered state.

According to a thirteenth aspect, a computer-readable storage medium is provided. The computer-readable storage medium stores a computer program or instructions. When the computer program or the instructions are executed by a processor, the method according to any one of the first aspect and the possible implementations of the first aspect is performed, the method according to any one of the second aspect and the possible implementations of the second aspect is performed, the method according to any one of the third aspect and the possible implementations of the third aspect is performed, the method according to any one of the fourth aspect and the possible implementations of the fourth aspect is performed, the method according to any one of the fifth aspect and the possible implementations of the fifth aspect is performed, or the method according to any one of the sixth aspect and the possible implementations of the sixth aspect is performed.

According to a fourteenth aspect, a computer program product including instructions is provided. When the computer program product runs on a computer, the method according to any one of the first aspect and the possible implementations of the first aspect is performed, the method according to any one of the second aspect and the possible implementations of the second aspect is performed, the method according to any one of the third aspect and the possible implementations of the third aspect is performed, the method according to any one of the fourth aspect and the possible implementations of the fourth aspect is performed, the method according to any one of the fifth aspect and the possible implementations of the fifth aspect is performed, or the method according to any one of the sixth aspect and the possible implementations of the sixth aspect is performed.

According to a fifteenth aspect, a chip system is provided, including a processor, configured to invoke a computer program or instructions from a memory and run the computer program or the instructions, so that a communication apparatus on which the chip system is installed implements the method according to any one of the first aspect and the possible implementations of the first aspect, the method according to any one of the second aspect and the possible implementations of the second aspect, the method according to any one of the third aspect and the possible implementations of the third aspect, the method according to any one of the fourth aspect and the possible implementations of the fourth aspect, the method according to any one of the fifth aspect and the possible implementations of the fifth aspect, or the method according to any one of the sixth aspect and the possible implementations of the sixth aspect.

### BRIEF DESCRIPTION OF DRAWINGS

FIG. 1 is a diagram of a network architecture applicable to an embodiment of this application;
FIG. 2 is a schematic flowchart in which UE reselects to an NR network or a 5G network from an LTE network when the UE is in emergency registration according to an embodiment of this application;
FIG. 3 is a schematic flowchart of a communication method 300 according to an embodiment of this application;
FIG. 4 is a schematic flowchart of a communication method 400 according to another embodiment of this application;
FIG. 5 is a schematic flowchart of a communication method 500 according to another embodiment of this application;
FIG. 6 is a schematic flowchart of a communication method 600 according to an embodiment of this application;
FIG. 7 is a schematic flowchart of a communication method 700 according to another embodiment of this application;
FIG. 8 is a schematic flowchart of a communication method 800 according to another embodiment of this application;
FIG. 9 is a schematic flowchart of a communication method 900 according to another embodiment of this application;
FIG. 10 is a schematic flowchart of a communication method 1000 according to an embodiment of this application;
FIG. 11 is a schematic flowchart of a communication method 1100 according to another embodiment of this application;
FIG. 12 is a schematic flowchart of a communication method 1200 according to another embodiment of this application;
FIG. 13 is a schematic flowchart of a communication method 1300 according to an embodiment of this application;
FIG. 14 is a schematic flowchart of a communication method 1400 according to another embodiment of this application;
FIG. 15 is a schematic flowchart of a communication method 1500 according to another embodiment of this application;
FIG. 16 is a block diagram of a communication apparatus 1600 according to an embodiment of this application;
FIG. 17 shows another communication apparatus 1700 according to an embodiment of this application; and
FIG. 18 shows a chip system 1800 according to an embodiment of this application.

### DESCRIPTION OF EMBODIMENTS

The following describes technical solutions of this application with reference to accompanying drawings.

The technical solutions provided in this application may be applied to various communication systems. In a communication system, a part operated by an operator may be referred to as a public land mobile network (public land mobile network, PLMN) (which may also be referred to as an operator network or the like). The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in this application may be specifically a network compliant with a requirement of the 3rd generation partnership project (3rd generation partnership project, 3GPP) standard, which is referred to as a 3GPP network for short. The 3GPP network usually includes but is not limited to a 5th generation (5th generation, 5G) mobile communication network (referred to as a 5G network for short), a 4th generation (4th generation, 4G) mobile communication network (referred to as a 4G network for short), and other future communication systems, for example, a 6G network. For ease of description, the 4G network or the 5G network is used as an example for description in embodiments of this application. Specifically, in China, the network of each mobile communication operator is considered as a PLMN. Therefore, the networks of China Mobile, China Unicom, and China Telecom are different PLMNs.

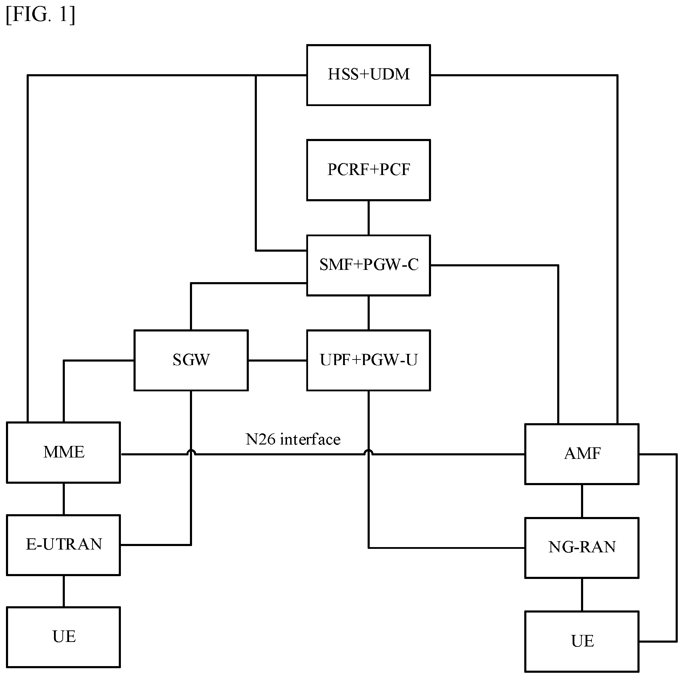

For ease of understanding embodiments of this application, a network architecture applicable to embodiments of this application is first described in detail with reference to FIG. 1.

FIG. 1 is a diagram of a network architecture applicable to an embodiment of this application. As shown in FIG. 1, the network architecture is, for example, a network architecture defined by the 3rd generation partnership project (3rd generation partnership project, 3GPP) and used for interworking between a 5GS system and an EPS system. The network architecture may include an access network (access network, AN) and a core network (core network, CN), and may further include user equipment (user equipment, UE).

The access network is configured to implement an access-related function, may provide a network access function for an authorized user in a specific area, and can determine transmission links of different quality based on a user level, a service requirement, and the like, to transmit user data. The access network forwards a control signal and user data between the terminal device and the core network. The access network may include an access network device. The access network device may be a device that provides access for the terminal device, and may include a radio access network (radio access network, RAN) device and an AN device. The (R)AN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon station. In systems using different radio access technologies, names of a device having a base station function may be different. For example, in a 5G system, the device is referred to as a RAN or a next generation node base station (next-generation Node base station, gNB). In a long term evolution (long term evolution, LTE) system, the device is referred to as an evolved NodeB (evolved NodeB, eNB or eNodeB).

The core network is responsible for maintaining subscription data of a mobile network, and providing functions such as session management, mobility management, policy management, and security authentication for the UE.

The following briefly describes the network elements shown in FIG. 1.
1. User equipment (user equipment, UE): The user equipment may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (Internet of things, IoT) system. The IoT is an important part of future information technology development. A main technical feature of the IoT is to connect things to a network by using a communication technology, to implement a smart network for human-machine interconnection and thing-thing interconnection. The IoT technology may use, for example, a narrow band (Narrow band, NB) technology to achieve massive connections, in-depth coverage and power saving for terminals.

In addition, the terminal device may further include a sensor like an intelligent printer, a train detector, or a gas station, which mainly functions to collect data (a part of terminal devices), receive control information and downlink data from a network device, send an electromagnetic wave, and transmit uplink data to the network device.

It should be understood that the terminal device may be any device that can access a network. The terminal device and the access network device may communicate with each other by using a specific air interface technology.

2. Access network: The access network includes an evolved UMTS terrestrial radio access network (evolved UMTS terrestrial radio access network, E-UTRAN) in an LTE system and a next generation radio access network (next generation radio access network, NG-RAN) in a 5G system. The access network may provide a network access function for an authorized user in a specific area, and includes a radio access network (radio access network, RAN) device and an AN device. The RAN device is mainly a wireless network device in a 3GPP network, and the AN device may be an access network device defined in a non-3GPP.

The access network may be an access network using different access technologies. Currently, there are two types of radio access technologies: a 3GPP access technology (for example, a radio access technology used in a 3G, 4G, or 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN. The non-3GPP access technology is an access technology that does not comply with the 3GPP standard specification, for example, an air interface technology represented by an access point (access point, AP) in wireless fidelity (wireless fidelity, Wi-Fi), worldwide interoperability for microwave access (worldwide interoperability for microwave access, WiMAX), or a code division multiple access (code division multiple access, CDMA) network. The access network device (AN device) may allow the terminal device and the 3GPP core network to perform interconnection and interworking by using the non-3GPP technology.

An access network that implements a network access function based on a wireless communication technology may be referred to as a RAN. The radio access network can be responsible for functions such as radio resource management, quality of service (quality of service, QoS) management, and data compression and encryption on an air interface side. The radio access network provides an access service for the terminal device, and further completes forwarding of a control signal and user data between a terminal and a core network.

For example, the radio access network may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an AP in a Wi-Fi system, a radio relay node, a radio backhaul node, a transmission point (transmission point, TP), a transmission reception point (transmission reception point, TRP), a gNB or a transmission point (TRP or TP) in a 5G (for example, NR) system, one antenna panel or a group of antenna panels (including a plurality of antenna panels) of a base station in the 5G system, a network node constituting a gNB or a transmission point, for example, a baseband unit (BBU) or a distributed unit (distributed unit, DU), or a base station in a next-generation 6G communication system. A specific technique and a specific device form factor that are used by the radio access network device are not limited in embodiments of this application.

The access network may provide a service for a cell. The terminal device may communicate with the cell through the transmission resource (for example, a frequency domain resource or a spectrum resource) allocated by the access network device.

3. Mobility management entity (mobility management entity, MME) network element: The MME network element is a network element on a control plane of a core network in an EPC system, and is mainly configured to perform access control, registration of a user with a network, mobility management, session management, route selection, and the like.

4. Access and mobility management function (access and mobility management function, AMF) network element: The AMF network element is a network element of a core network of a 5GS system, and is mainly used for mobility management and access management, such as user location update, registration of a user with a network, and user handover. The AMF may be further configured to implement functions other than session management in the MME, for example, a lawful interception function or an access authorization (or authentication) function.

5. Serving gateway (serving gateway, SGW) network element: The SGW network element is mainly responsible for user plane processing, is responsible for functions such as data packet routing and forwarding, and is configured to process service flows, complete service bearing, and the like.

6. SMF+PGW-C converged network element: The SMF+PGW-C converged network element is a network entity formed by combining a session management function (session management function, SMF) and a PDN gateway control plane (PDN gateway control plane function, PGW-C). The SMF+PGW-C converged network element is mainly used for session management, internet protocol (internet protocol, IP) address assignment and management of UE, selection of a manageable user plane function, a termination point of a policy control and charging function interface, downlink data notification, and the like.

7. UPF+PGW-U converged network element: The UPF+PGW-U converged network element is a network entity formed by combining a user plane function (user plane function, UPF) and a PDN gateway user plane function (PDN gateway user plane function, PGW-U). The UPF+PGW-U converged network element is mainly responsible for forwarding and receiving user data in the terminal device. For example, the UPF+PGW-U converged network element may receive user data from a data network (data network, DN), and transmit the user data to the terminal device through an access network device.

8. HSS+UDM converged network element: The HSS+UDM converged network element is a network entity formed by combining a home subscriber server (home subscriber server, HSS) and unified data management (unified data management, UDM). The HSS+UDM converged network element is configured to generate an authentication credential, process a user identity (for example, store and manage a permanent identity of the user), perform access authorization control, manage subscription data, and the like.

9. PCRF+PCF converged network element: The PCRF+PCF converged network element is a network entity formed by combining a policy and charging control function (policy and charging rule function, PCRF) and a policy control function (policy control function, PCF).

10. N26 interface: The N26 interface is an interface between the AMF network element and the MME network element, and is used by a target side network to obtain mobility management and session management related information of the UE from a source side network through the N26 interface in a 4G-5G interoperation scenario. The N26 interface is an optional interface, and application and deployment of the N26 interface depend on specific deployment policies and service requirements of operators.

The network architecture shown in FIG. 1 supports service continuity in interoperation between a 4G system and a 5G system, and a user plane anchor does not need to be changed in a process of changing from the 4G system to the 5G system or from the 5G system to the 4G system, thereby saving service processing resources.

It should be understood that the network elements in the network architecture shown in FIG. 1 may alternatively interact with each other through another interface, for example, an N1 interface between the AMF network element and the UE. For brevity, details are not described herein.

It should be understood that the network architecture applied to embodiments of this application is merely an example of a network architecture described from a perspective of a service-based architecture, and a network architecture applicable to embodiments of this application is not limited thereto. Embodiments of this application are applicable to any network architecture that can implement functions of the network elements.

It should be further understood that the MME, the AMF, the SGW, the SMF+PGW-C, the UPF+PGW-U, and the HHS+UDM shown in FIG. 1 may be understood as network elements configured to implement different functions in a core network, for example, may be combined into a network slice as needed. These core network elements may be independent devices, or may be integrated into a same device to implement different functions. Specific forms of the foregoing network elements are not limited in this application.

It should be further understood that the foregoing names are defined merely for ease of distinguishing between different functions, and should not constitute any limitation on this application. This application does not exclude a possibility that another name is used in the 5G network and another future network. For example, in a 6G network, a part or all of the foregoing network elements may still use terms in 5G, or may use other names. A name of an interface between the network elements in FIG. 1 is merely an example. In a specific implementation, the name of the interface may be another name. This is not specifically limited in this application. In addition, names of messages (or signaling) transmitted between the foregoing network elements are merely examples, and do not constitute any limitation on functions of the messages.

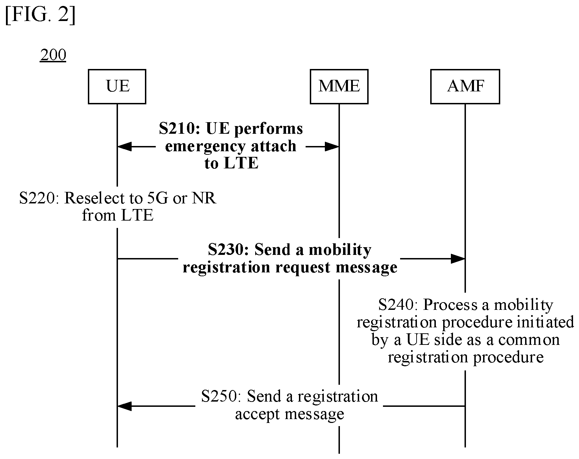

To facilitate understanding of the technical solutions provided in embodiments of this application, a specific procedure in which the UE reselects to NR from LTE when the UE is in an emergency registered state is first described in detail with reference to FIG. 2. FIG. 2 is a schematic flowchart in which UE reselects to an NR network or a 5G network from an LTE network when the UE is in emergency registration according to an embodiment of this application. As shown in FIG. 2, the following steps may be specifically included.

S210: UE performs emergency attach to an LTE network (where in this case, the UE has an emergency PDN bearer).

S220: The UE reselects to an NR network from the LTE network.

Specifically, due to weak signals, abnormal signals, or other reasons, communication between the UE and the LTE network is interrupted, and the UE enters an idle (IDLE) mode from a connected (Connected) mode. In this case, the UE may reselect to a 5G network or the NR network from the LTE network. It is clearly specified in the protocol that when an emergency PDN cannot be mapped from the LTE network to the NR network or the 5G network, the emergency PDN bearer is locally released.

S230: The UE sends a mobility registration request message to an AMF network element.

S240: When the AMF network element does not support an N26 interface, in a possible case, the AMF network element cannot obtain context information of the UE, and may restart an identity procedure, an authentication procedure, and a secure access (security mode command, SMC) procedure, to process a mobility registration procedure initiated by a UE side as a common registration procedure (or an initial registration procedure).

S250: The AMF network element sends a registration accept message to the UE.

In the registration procedure shown in FIG. 2, the AMF network element sends the registration accept message to the UE, which may be considered as that the NR network or the 5G network allows the UE to register. In this case, a network side is in a non-emergency registered state, but the UE is still in an emergency registered state, resulting in a registration state mismatch between the network side and the UE.

In view of this, this application is intended to provide a communication method, so as to resolve a registration state mismatch between the terminal device and the network side.

The communication method provided in this application is described in detail below with reference to specific embodiments.

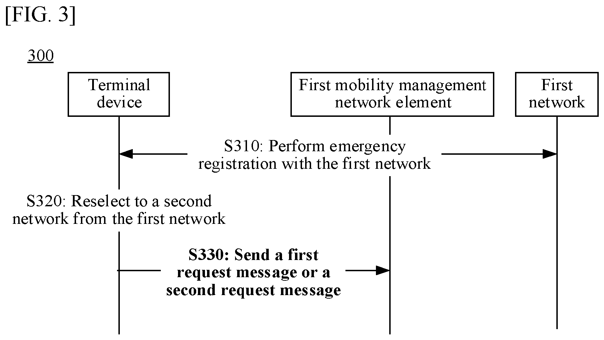

FIG. 3 is a schematic flowchart of a communication method 300 according to an embodiment of this application. As shown in FIG. 3, the method includes at least the following steps.

S310: A terminal device performs emergency registration with a first network.

Specifically, when the first network is an LTE network, that the terminal device performs emergency registration with the first network may be understood as that the terminal device performs emergency attach to the first network, that is, "emergency registration" may be understood as "emergency attach". For example, in step S310, the terminal device initiates an emergency attach procedure to a mobility management entity MME network element of the first network. Specifically, the terminal device sends an attach request (Attach Request) message to the MME network element, and then the terminal device performs emergency attach to the first network (the LTE network). It should be understood that, for specific descriptions of the emergency attach procedure, refer to the conventional technology. Details are not described herein.

When the first network is an NR network or a 5G network, that the terminal device performs emergency registration with the first network may be understood as that the terminal device performs emergency registration with the first network. For example, in step S310, the terminal device initiates an emergency registration procedure to an access and mobility management function AMF network element of the first network. Specifically, the terminal device sends an emergency registration request (Registration Request) message to the AMF network element, and then the terminal device performs emergency registration with the first network (the 5G network or the NR network). It should be understood that for specific descriptions of the emergency registration procedure, refer to the conventional technology. Details are not described herein.

S320: The terminal device reselects to a second network from the first network.

Specifically, after performing emergency registration with the first network, the terminal device is in an emergency registered state and bears an emergency session management context. However, when communication between the terminal device and the first network is interrupted (for example, the communication is interrupted due to weak signals, abnormal signals, or other reasons), the terminal device enters an idle (IDLE) mode from a connected (Connected) mode. In this case, the terminal device may reselect to the second network from the first network. It should be noted that for a specific procedure in which the terminal device reselects to the second network from the first network, refer to the conventional technology. Details are not described herein.

It should be understood that, when the first network is an LTE network, the emergency session management context may be an emergency packet data network (packet data network, PDN) session. When the first network is a 5G network or an NR network, the emergency session management context may be an emergency packet data unit (packet data unit, PDU) session.

Optionally, in a possible implementation, the first network and the second network may be different PLMNs.

For example, the first network may be China Mobile, and the second network may be China Unicom or China Telecom.

For another example, the first network may be China Unicom, and the second network may be China Mobile or China Telecom.

For another example, the first network may be China Telecom, and the second network may be China Mobile or China Unicom.

It should be understood that the foregoing examples are merely for description, and are not limited in this application.

Optionally, in a possible implementation, the first network and the second network may be a same PLMN of different access technologies. The access technology may be any one of the following: an LTE system, an NR system, or a 5G system.

For example, the first network may be a PLMN whose access technology is an LTE system, and the second network may be a PLMN whose access technology is a 5G system or a PLMN whose access technology is an NR system.

For another example, the first network may be a PLMN whose access technology is a 5G system or a PLMN whose access technology is an NR system, and the second network may be a PLMN whose access technology is an LTE system.

It should be understood that the foregoing examples are merely for description, and are not limited in embodiments of this application.

S330: The terminal device sends a first request message or a second request message to a first mobility management network element, and correspondingly, the first mobility management network element receives the first request message or the second request message.

Specifically, the first mobility management network element is in the second network, the first request message is used to request emergency registration with the second network, and the second request message is used to request initial registration with the second network. That the first mobility management network element is in the second network may be understood as that the second network includes the first mobility management network element.

It should be noted that when the second network is a 5G network or an NR network, the first mobility management network element is the AMF network element. Correspondingly, the first request message may be an emergency registration request message, and the second request message may be an initial registration request message.

When the second network is an LTE network, the first mobility management network element is the MME network element. Correspondingly, the first request message may be an emergency attach request message, and the second request message may be an attach request message.

It should be noted that whether the terminal device sends the first request message or the second request message to the first mobility management network element is determined by the terminal device based on whether an upper layer performs an emergency service.

Optionally, in a possible implementation, when the terminal device performs an emergency service, the terminal device sends the first request message to the first mobility management network element, and correspondingly, the first mobility management network element receives the first request message. The first request message is used to request emergency registration.

For example, when the second network is an NR network or a 5G network, the terminal device sends the first request message (for example, the emergency registration request message) to the first mobility management network element (for example, the AMF network element). The first request message is used to request emergency registration. After the first mobility management network element receives the first request message, the second network enters the emergency registered state, and then the first mobility management network element sends a registration accept message #1 to the terminal device, where the registration accept message #1 carries emergency registration identification information. The emergency registration identification information indicates that the emergency registration succeeds, that is, both the terminal device and the second network enter the emergency registered state.

For example, when the second network is an LTE network, the terminal device sends the first request message (for example, the emergency attach request message) to the first mobility management network element (for example, the MME network element), where the first request message is used to request emergency registration. After the first mobility management network element receives the first request message, the second network enters the emergency registered state, and then the first mobility management network element sends an attach accept message #1 to the terminal device, where the attach accept message #1 carries emergency registration identification information. The emergency registration identification information indicates that the emergency registration succeeds, that is, both the terminal device and the second network enter the emergency registered state.

Optionally, in a possible implementation, when the terminal device does not perform an emergency service, the terminal device sends the second request message to the first mobility management network element, and correspondingly, the first mobility management network element receives the second request message.

For example, when the second network is an NR network or a 5G network, the second request message (for example, the initial registration request message) is used to request initial registration. After the first mobility management network element (for example, the AMF network element) receives the second request message, the second network enters a non-emergency registered state, and then the first mobility management network element (the AMF network element) sends a registration accept message #2 to the terminal device. In this case, both the terminal device and the second network enter the non-emergency registered state.

For example, when the second network is an LTE network, the second request message (the attach request message) is used to request emergency registration. After the first mobility management network element (the MME network element) receives the second request message, the second network enters a non-emergency registered state, and then the first mobility management network element (the MME network element) sends an attach accept message #2 to the terminal device. In this case, both the terminal device and the second network enter the non-emergency registered state.

Optionally, in this embodiment of this application, the step in which the terminal device sends the first request message or the second request message to the first mobility management network element is performed when the first network and the second network cannot communicate with each other. That the first network and the second network cannot communicate with each other may be understood as the following several cases.

Case 1: The second network is not equivalent to the first network.

For example, in a possible implementation, the first network and the second network are different PLMNs.

For example, the first network may be China Mobile, and the second network may be China Unicom or China Telecom.

For another example, the first network may be China Unicom, and the second network may be China Mobile or China Telecom.

For another example, the first network may be China Telecom, and the second network may be China Mobile or China Unicom.

For example, in a possible implementation, the first network and the second network are a same PLMN of different access technologies.

For example, the first network may be a PLMN whose access technology is an LTE system, and the second network may be a PLMN whose access technology is a 5G system or a PLMN whose access technology is an NR system.

For another example, the first network may be a PLMN whose access technology is a 5G system or a PLMN whose access technology is an NR system, and the second network may be a PLMN whose access technology is an LTE system.

Case 2: There is no communication interface between the first mobility management network element and a mobility management network element of the first network.

For example, neither the first mobility management network element nor the mobility management network element of the first network supports an N26 interface.

Optionally, in a possible implementation, before step S330, the method may further include: The terminal device enters a deregistered state.

For example, when the terminal device performs an emergency service, the terminal device performs local deregistration, that is, the terminal device enters the deregistered state, and then sends the first request message to the first mobility management network element.

For example, when the terminal device does not perform an emergency service, the terminal device performs local deregistration, that is, the terminal device enters the deregistered state, and then sends the second request message to the first mobility management network element.

It should be noted that for related content about entering the deregistered state by the terminal device, refer to the conventional technology. Details are not described herein.

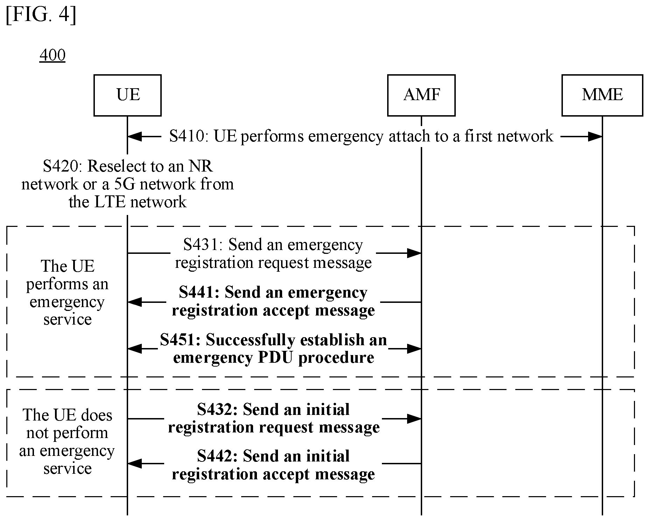

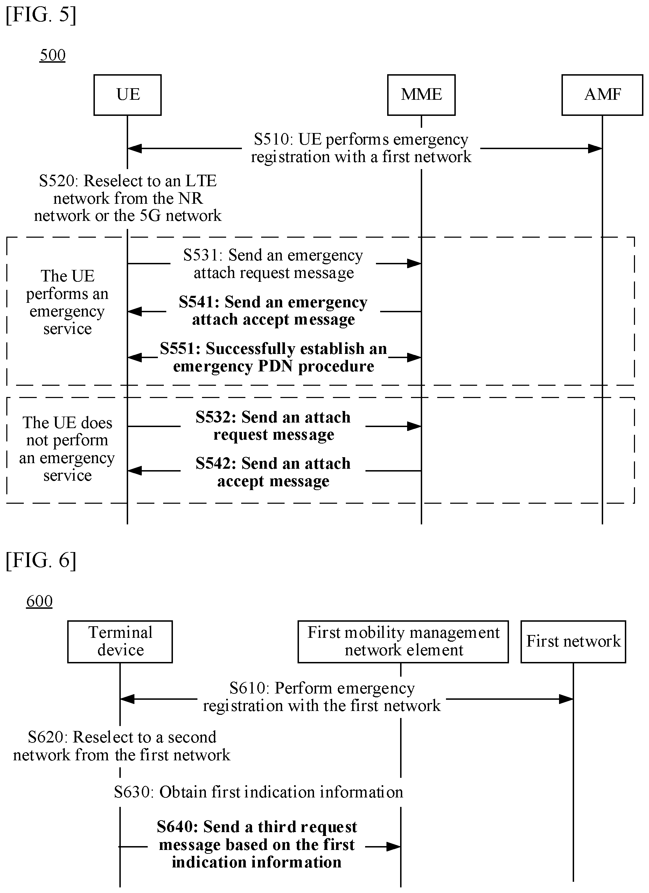

Specific embodiments of the communication method 300 described above are described in detail below with reference to FIG. 4 and FIG. 5.

FIG. 4 is a schematic flowchart of a communication method 400 according to an embodiment of this application. As shown in FIG. 4, the method includes at least the following steps.

It should be noted in advance that the embodiment shown in FIG. 4 is described by using an example in which a first network is a network whose access technology is an LTE system and a second network is a network whose access technology is a 5G system or an NR system. For a case in which the first network and the second network are different PLMNs (for example, the first network is an LTE PLMN 1, and the second network is an LTE PLMN 2), refer to the embodiment shown in FIG. 4. For brevity, details are not described herein.

S410: UE performs emergency attach to a first network.

The first network is an LTE network. For ease of understanding, the following uses the LTE network to replace the first network for description.

Specifically, the UE initiates an emergency attach procedure to an MME network element of the LTE network. For example, the UE sends an emergency attach request (Attach Request) message to the MME network element, and then the UE performs emergency attach to the LTE network. It should be understood that, for specific descriptions of the emergency attach procedure, refer to the conventional technology. Details are not described herein.

S420: The UE reselects to a second network from the first network.

The second network is an NR network or a 5G network. For ease of understanding, the following uses the 5G network or the NR network to replace the second network for description.

Specifically, after performing emergency attach to the LTE network, the UE is in an emergency registered state and bears an emergency PDN. However, when communication between the UE and the LTE network is interrupted (for example, the communication is interrupted due to weak signals, abnormal signals, or other reasons), the UE enters an idle (IDLE) mode from a connected (Connected) mode. In this case, the UE is disconnected from the network and finds the NR network or the 5G network, and the UE may reselect to the 5G network or the NR network from the LTE network.

Further, the terminal device sends an emergency registration request message or an initial registration request message to an AMF network element based on whether an upper layer needs to perform an emergency service.

Optionally, in a possible implementation, when the terminal device performs an emergency service, the method may include:

S431: The UE sends the emergency registration request message to the AMF network element, and correspondingly, the AMF network element receives the emergency registration request message, where the emergency registration request message is used to request the emergency service.

S441: The AMF network element sends an emergency registration accept message to the UE, and correspondingly, the UE receives the emergency registration accept message.

Specifically, the emergency registration accept message carries emergency registration identification information, and the emergency registration identification information indicates that the terminal device successfully performs emergency registration, that is, both the UE and a network side (the 5G network or the NR network) enter the emergency registered state.

S451: The UE and the AMF network element successfully establish an emergency PDU procedure.

Specifically, the UE initiates an emergency PDU establishment procedure to the AMF network element. After the UE successfully establishes an emergency PDU with the AMF network element, the UE may perform the emergency service, for example, make an emergency call. It should be noted that, for specific descriptions of the emergency PDU establishment procedure, refer to the conventional technology. Details are not described herein.

Optionally, before step S431, the method may further include: The UE enters a deregistered state.

Optionally, in a possible implementation, when the terminal device does not perform an emergency service, the method may include:

S432: The UE sends the initial registration request message to the AMF network element, and correspondingly, the AMF network element receives the initial registration request message.

S442: The AMF network element sends an initial registration accept message to the UE, and correspondingly, the UE receives the initial registration accept message.

Specifically, the AMF network element delivers the initial registration accept message to the UE after receiving the initial registration request message, to indicate that the terminal device successfully performs initial registration, that is, both the UE and a network side enter a non-emergency registered state.

Optionally, before step S432, the method may further include: The UE enters a deregistered state.

FIG. 5 is a schematic flowchart of a communication method 500 according to an embodiment of this application. As shown in FIG. 5, the method includes at least the following steps.

It should be noted in advance that the embodiment shown in FIG. 5 is described by using an example in which a first network is a network whose access technology is a 5G system or an NR system and a second network is a network whose access technology is an LTE system. For a case in which the first network and the second network are different PLMNs (for example, the first network is an NR PLMN 1, and the second network is an NR PLMN 2), refer to the embodiment shown in FIG. 5. For brevity, details are not described herein.

S510: UE performs emergency registration with a first network.

The first network is a 5G network or an NR network. For ease of understanding, the following uses the 5G network or the NR network to replace the first network for description.

Specifically, the UE initiates an emergency registration procedure to an AMF network element of the 5G network or the NR network. For example, the UE sends a registration request (Registration Request) message to the AMF network element, and then the UE performs emergency registration with the 5G network or the NR network. It should be understood that for specific descriptions of the emergency registration procedure, refer to the conventional technology. Details are not described herein.

S520: The UE reselects to a second network from the first network.

The second network is an LTE network. For ease of understanding, the following uses the LTE network to replace the second network for description.

Specifically, after performing emergency registration with the 5G network or the NR network, the UE is in an emergency registered state and bears an emergency PDU. However, when communication between the UE and the 5G network or the NR network is interrupted (for example, the communication is interrupted due to weak signals, abnormal signals, or other reasons), the UE enters an idle (IDLE) mode from a connected (Connected) mode. In this case, the UE is disconnected from the network and finds the LTE network, and the UE may reselect to the LTE network from the 5G network or the NR network.

Further, the terminal device sends an emergency registration request message or an initial registration request message to an MME network element based on whether an upper layer needs to perform an emergency service.

Optionally, in a possible implementation, when the terminal device performs an emergency service, the method may include:

S531: The UE sends an emergency attach request message to the MME network element, and correspondingly, the MME network element receives the emergency attach request message, where the emergency attach request message is used to request the emergency service.

S541: The MME network element sends an emergency attach accept message to the UE, and correspondingly, the UE receives the emergency attach accept message.

Specifically, the emergency attach accept message carries emergency registration identification information, and the emergency attach identification information indicates that the UE successfully performs emergency registration, that is, both the UE and a network side (the LTE network) enter the emergency registered state.

S551: The UE and the MME network element successfully establish an emergency PDN procedure.

Specifically, the UE initiates an emergency PDN establishment procedure to the MME network element. After the UE successfully establishes an emergency PDN with the MME network element, the UE may perform the emergency service, for example, make an emergency call. It should be noted that, for specific descriptions of the emergency PDN establishment procedure, refer to the conventional technology. Details are not described herein.

Optionally, before step S531, the method may further include: The UE enters a deregistered state.

Optionally, in a possible implementation, when the terminal device does not perform an emergency service, the method may include:

S532: The UE sends an attach request message to the MME network element, and correspondingly, the MME network element receives the attach request message.

S542: The MME network element sends an attach accept message to the UE, and correspondingly, the UE receives the attach accept message.

Specifically, the MME network element delivers the attach accept message to the UE after receiving the attach request message, to indicate that the UE successfully performs initial registration, that is, both the UE and a network side enter a non-emergency registered state.

Optionally, before step S532, the method may further include: The UE enters a deregistered state.

According to the foregoing technical solution, when performing an emergency service, the terminal device sends, to a mobility management network element of the second network, a request message for requesting emergency registration; and the second network enters an emergency registered state after receiving the request message for requesting the emergency registration. When not performing an emergency service, the terminal device sends, to a mobility management network element of the second network, a request message for requesting initial registration; and the second network enters a non-emergency registered state after receiving the request message for requesting the initial registration. In this way, a registration state match between the second network and the terminal device is achieved.

FIG. 6 is a schematic flowchart of a communication method 600 according to an embodiment of this application. As shown in FIG. 6, the method may include at least the following steps.

S610: A terminal device performs emergency registration with a first network.

It should be noted that step S610 is similar to step S310. For brevity, details are not described herein.

S620: The terminal device reselects to a second network from the first network.

It should be noted that step S620 is similar to step S320. For brevity, details are not described herein.

S630: The terminal device obtains first indication information, where the first indication information indicates the terminal device to enter a non-emergency registered state.

S640: The terminal device determines, based on the first indication information, to send a third request message to a first mobility management network element, and correspondingly, the first mobility management network element receives the third request message.

Specifically, the first mobility management network element is in the second network, and the third request message is used to request initial registration with the second network. After obtaining the first indication information, the terminal device actively leaves an emergency registered state, and then sends the third request message to the first mobility management network element, to request initial registration with the second network. That the first mobility management network element is in the second network may be understood as that the second network includes the first mobility management network element.

It should be noted that when the second network is an NR network or a 5G network, the first mobility management network element is an AMF network element. Correspondingly, the third request message may be an initial registration request message.

When the second network is an LTE network, the first mobility management network element is an MME network element. Correspondingly, the third request message may be an initial attach request message.

Optionally, before step S630, the method may further include: The terminal device sends a fourth request message to the first mobility management network element, and correspondingly, the first mobility management network element receives the fourth request message, where the fourth request message is used to request mobility registration with the second network.

The first mobility management network element sends a first response message to the terminal device, and correspondingly, the terminal device receives the first response message from the first mobility management network element, where the first response message includes the first indication information.

For example, in a possible implementation, the first indication information may be non-emergency registration identification information.

Specifically, the terminal device sends the fourth request message to the first mobility management network element, to request mobility registration with the second network. After the first mobility management network element receives the fourth request message, the second network enters the non-emergency registered state. Then, the first mobility management network element sends the first response message to the terminal device, where the first response message includes the non-emergency registration identification information. After obtaining the non-emergency registration identification information, the terminal device determines that a registration status of the second network is the non-emergency registered state. In this case, the terminal device actively leaves the emergency registered state, and then sends the third request message to the first mobility management network element to request initial registration with the second network.

For example, in a possible implementation, the first indication information may be first identification information, and the first identification information indicates that a session management context of the second network is released.

Specifically, the terminal device sends the fourth request message to the first mobility management network element, to request mobility registration with the second network. After the first mobility management network element receives the fourth request message, the second network enters the non-emergency registered state. Then, the first mobility management network element sends the first response message to the terminal device, where the first response message includes the first identification information. After obtaining the first identification information, the terminal device learns that the session management context of the second network is released. In this case, the terminal device actively leaves the emergency registered state, and then sends the third request message to the first mobility management network element to request initial registration with the second network.

It should be noted that when an access technology of the second network is an NR system or a 5G system, the fourth request message may be a mobility registration request message, the first response message may be a mobility registration accept message, and the session management context may be a PDU session.

When an access technology of the second network is an LTE system, the fourth request message may be a tracking area update request message, the first response message may be a tracking area update accept message, and the session management context may be a PDN session.

Optionally, in this embodiment of this application, the step in which the terminal device sends the third request message to the first mobility management network element is performed when the first network and the second network cannot communicate with each other. That the first network and the second network cannot communicate with each other may be understood as the following several cases.

Case 1: The second network is not equivalent to the first network.

Case 2: There is no communication interface between the first mobility management network element and a mobility management network element of the first network.

It should be noted that for specific descriptions of Case 1 and Case 2, refer to the foregoing descriptions. Details are not described herein.

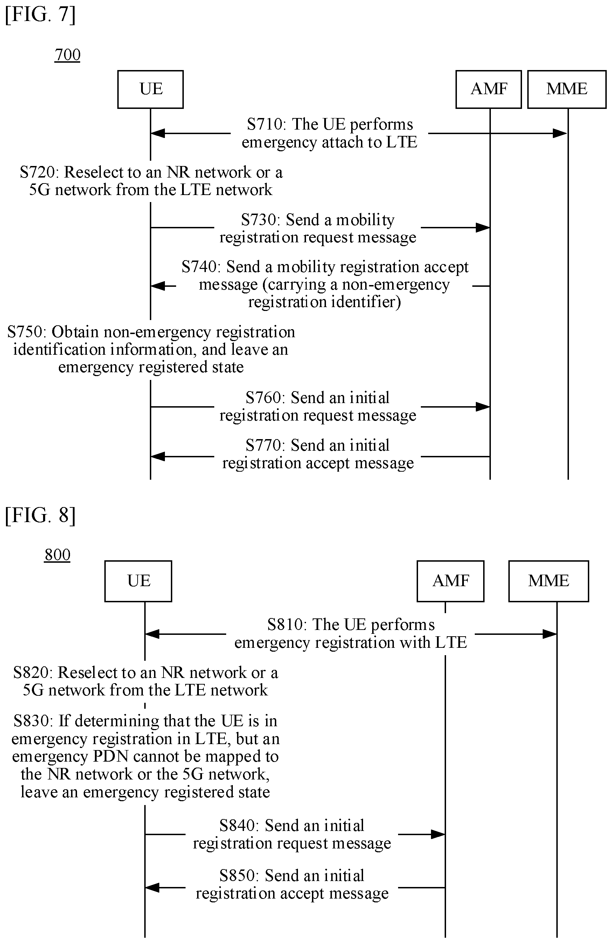

Specific embodiments of the communication method 600 described above are described in detail below with reference to FIG. 7 to FIG. 9.

It should be noted in advance that the embodiments shown in FIG. 7 to FIG. 9 are described by using an example in which a first network is an LTE network and a second network is a 5G network or an NR network. For a case in which the first network is a 5G network or an NR network and the second network is an LTE network or a case in which the first network and the second network are different PLMNs (for example, the first network is an NR PLMN 1, and the second network is an NR PLMN 2), refer to the embodiments shown in FIG. 7 to FIG. 9. For brevity, details are not described herein.

FIG. 7 is a schematic flowchart of a communication method 700 according to an embodiment of this application. As shown in FIG. 7, the method may include at least the following steps.

S710: UE performs emergency attach to a first network.

It should be noted that step S710 is similar to step S410. For brevity, details are not described herein.

S720: The UE reselects to a second network from the first network.

It should be noted that step S720 is similar to step S420. For brevity, details are not described herein.

S730: The UE sends a mobility registration request message to an AMF network element, and correspondingly, the AMF network element receives the mobility registration request message.

S740: The AMF network element sends a mobility registration accept message to the UE, and correspondingly, the UE receives the mobility registration accept message.

Specifically, the mobility registration request message is used to request mobility registration with a 5G network or an NR network. After receiving the mobility registration request message, the AMF network element enters a non-emergency registered state, and sends the mobility registration accept message to the UE. The mobility registration accept message carries non-emergency registration identification information, and the non-emergency registration identification information indicates that a network side (for example, the 5G network or the NR network) is in the non-emergency registered state.

S750: After obtaining the non-emergency registration identification information, the UE performs local deregistration and leaves an emergency registered state.

S760: The UE sends an initial registration request message to the AMF network element, and correspondingly, the AMF network element receives the initial registration request message.

S770: The AMF network element sends an initial registration accept message to the UE, and correspondingly, the UE receives the initial registration accept message.

After steps S760 and S770, both the UE and the network side (for example, the 5G network or the NR network) enter the non-emergency registered state.

FIG. 8 is a schematic flowchart of a communication method 800 according to another embodiment of this application. As shown in FIG. 8, the method may include at least the following steps.

S810: UE performs emergency attach to a first network.

It should be noted that step S810 is similar to step S410. For brevity, details are not described herein.

S820: The UE reselects to a second network from the first network.

It should be noted that step S820 is similar to step S420. For brevity, details are not described herein.

S830: If the UE determines that the UE is in an emergency registered state in an LTE network but an emergency PDN cannot be mapped to an NR network or a 5G network, the UE enters a deregistered state and leaves an emergency registered state.

Specifically, because the emergency PDN cannot be mapped to the NR network or the 5G network, in this case, as specified in the protocol, the emergency PDN has been released. Therefore, an emergency service of the UE is interrupted. In this case, the UE performs local deregistration and leaves the emergency registered state.

"Cannot be mapped" may also be understood as "cannot be migrated" or "cannot be moved." It should be understood that this is not limited in this embodiment of this application.

S840: The UE sends an initial registration request message to the AMF network element, and correspondingly, the AMF network element receives the initial registration request message.

S850: The AMF network element sends an initial registration accept message to the UE, and correspondingly, the UE receives the initial registration accept message.

After steps S840 and S850, both the UE and a network side (for example, the 5G network or the NR network) enter a non-emergency registered state.

It should be noted that, if the UE further needs to perform an emergency service, for example, making an emergency call, the UE may further initiate an emergency PDU session establishment procedure after step S850. In other words, the UE may directly initiate a normal service request after initial registration succeeds, and perform the emergency service after establishing an emergency PDU session.

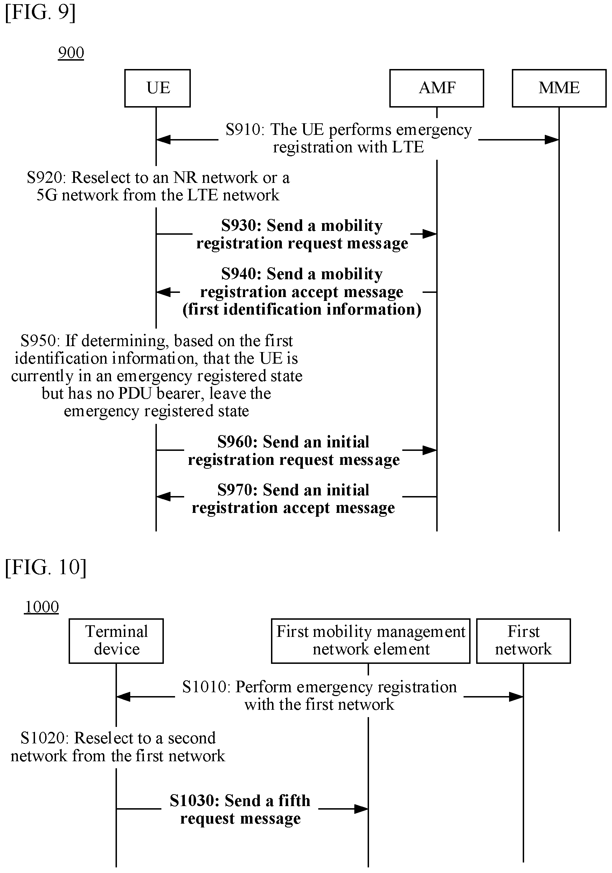

FIG. 9 is a schematic flowchart of a communication method 900 according to another embodiment of this application. As shown in FIG. 9, the method may include at least the following steps.

S910: UE performs emergency attach to a first network.

It should be noted that step S910 is similar to step S410. For brevity, details are not described herein.

S920: The UE reselects to a second network from the first network.

It should be noted that step S920 is similar to step S420. For brevity, details are not described herein.

S930: The UE sends a mobility registration request message to an AMF network element, and correspondingly, the AMF network element receives the mobility registration request message.

S940: The AMF network element sends a mobility registration accept message to the UE, and correspondingly, the UE receives the mobility registration accept message.

Specifically, the mobility registration request message and the mobility registration accept message each carry PDU session status information (PDU Session Status), and the mobility registration request message is used to request mobility registration with a 5G network or an NR network. After receiving the mobility registration request message, the AMF network element enters a non-emergency registered state, and sends the mobility registration accept message to the UE.

In this embodiment, the mobility registration accept message carries first identification information, and the first identification information indicates that a PDU on the UE side is released.

S950: After obtaining the first identification information, if the UE determines that the UE is currently in an emergency registered state but has no PDU bearer, the UE actively leaves the emergency registered state, and initiates an initial registration procedure to the AMF network element.

S960: The UE sends an initial registration request message to the AMF network element, and correspondingly, the AMF network element receives the initial registration request message.

S970: The AMF network element sends an initial registration accept message to the UE, and correspondingly, the UE receives the initial registration accept message.

After steps S960 and S970, both the UE and a network side (for example, the 5G network or the NR network) enter the non-emergency registered state.

According to the foregoing technical solution, the terminal device obtains first indication information, where the first indication information indicates the terminal device to enter the non-emergency registered state, and the terminal device initiates the initial registration procedure to the second network based on the first indication information, to achieve a state match between the terminal device and the second network.

FIG. 10 is a schematic flowchart of a communication method 1000 according to another embodiment of this application. As shown in FIG. 10, the method may include at least the following steps.

S1010: A terminal device performs emergency registration with a first network.

It should be noted that step S1010 is similar to step S310. For brevity, details are not described herein.

S1020: The terminal device reselects to a second network from the first network.

It should be noted that step S1020 is similar to step S320. For brevity, details are not described herein.

S1030: The terminal device sends a fifth request message to a first mobility management network element, and correspondingly, the first mobility management network element receives the fifth request message.

Specifically, the first mobility management network element is in the second network, and the fifth request message is used to request mobility registration with the second network. The fifth request message includes second indication information, and the second indication information indicates that a registration status of the terminal device is an emergency registered state. After receiving the second indication information, the first mobility management network element learns that the registration status of the terminal device is the emergency registered state. In this case, the second network determines to enter the emergency registered state. For example, the second network may directly enter the emergency registered state without an authentication AUTH procedure, an identity procedure, or the like.

For example, the second indication information may be emergency registration identification information, and the emergency registration identification information identifies that the registration status of the terminal device is the emergency registered state.

That the first mobility management network element is in the second network described above may also be understood as that the second network includes the first mobility management network element.

It should be noted that when the second network is an NR network or a 5G network, the first mobility management network element is an AMF network element. Correspondingly, the fifth request message may be a mobility registration request message.

When the second network is an LTE network, the first mobility management network element is an MME network element. Correspondingly, the fifth request message may be a tracking area update request message.

Optionally, in a possible implementation, the method may further include: The first mobility management network element sends third indication information to the terminal device, and correspondingly, the terminal device receives the third indication information, where the third indication information indicates that the second network is in the emergency registered state.

Optionally, the third indication information may be included in a registration accept message #3. In other words, the first mobility management network element sends the registration accept message #3 to the terminal device, where the registration accept message #3 carries the third indication information.

Optionally, in this embodiment of this application, the step in which the terminal device sends the fifth request message to the first mobility management network element is performed when the first network and the second network cannot communicate with each other. That the first network and the second network cannot communicate with each other may be understood as the following several cases.

Case 1: The second network is not equivalent to the first network.

Case 2: There is no communication interface between the first mobility management network element and a mobility management network element of the first network.

It should be noted that for specific descriptions of Case 1 and Case 2, refer to the foregoing descriptions. Details are not described herein.

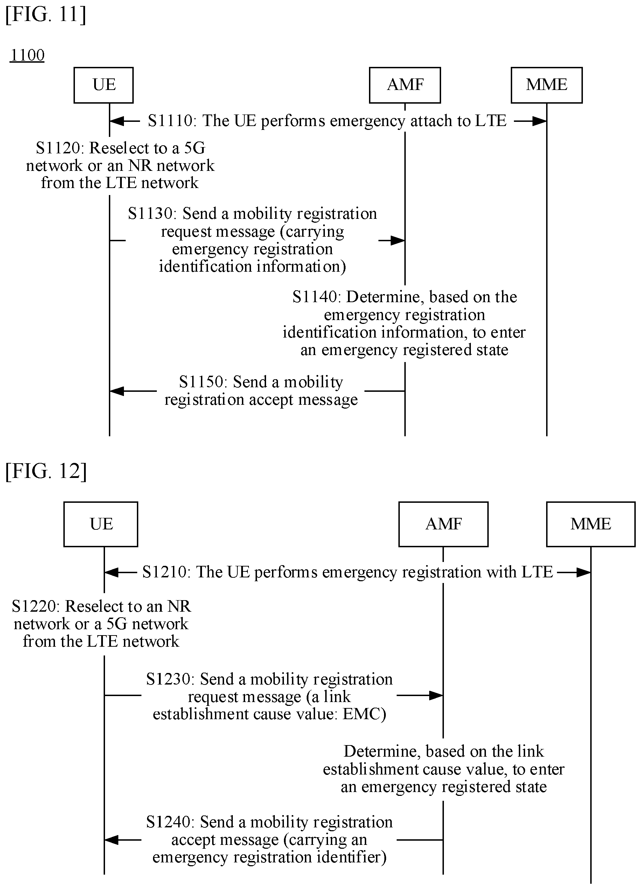

Specific embodiments of the communication method 1000 described above are described in detail below with reference to FIG. 11 and FIG. 12.

It should be noted in advance that the embodiments shown in FIG. 11 and FIG. 12 are described by using an example in which a first network is an LTE network and a second network is a 5G network or an NR network. For a case in which the first network is a 5G network or an NR network and the second network is an LTE network or a case in which the first network and the second network are different PLMNs (for example, the first network is an NR PLMN 1, and the second network is an NR PLMN 2), refer to the embodiments shown in FIG. 11 and FIG. 12. For brevity, details are not described herein.

FIG. 11 is a schematic flowchart of a communication method 1100 according to an embodiment of this application. As shown in FIG. 11, the method may include at least the following steps.

S1110: UE performs emergency attach to a first network.

It should be noted that step S1110 is similar to step S410. For brevity, details are not described herein.

S1120: The UE reselects to a second network from the first network.

It should be noted that step S1120 is similar to step S420. For brevity, details are not described herein.

S1130: The UE sends a mobility registration request message to an AMF network element, and correspondingly, the AMF network element receives the mobility registration request message.

Specifically, the mobility registration request message is used to request mobility registration with the second network (for example, a 5G network or an NR network). The mobility registration request message includes emergency registration identification information, and the emergency registration identification information identifies that a registration status of the UE is an emergency registered state.

S1140: After receiving the emergency registration identification information, the AMF network element learns that the registration status of the terminal device is the emergency registered state, and in this case, a network side (for example, the 5G network or the NR network) determines, based on the emergency registration identification information, to enter the emergency registered state. For example, the second network may directly enter the emergency registered state without an AUTH procedure, an identity procedure, or the like.

S1150: The AMF network element sends a mobility registration accept message to the UE, and correspondingly, the UE receives the mobility registration accept message.

Specifically, both the network side (for example, the 5G network or the NR network) and the UE side enter the emergency registered state.

FIG. 12 is a schematic flowchart of a communication method 1200 according to another embodiment of this application. As shown in FIG. 12, the method may include at least the following steps.

S1210: UE performs emergency attach to a first network.

It should be noted that step S1210 is similar to step S410. For brevity, details are not described herein.

S1220: The UE reselects to a second network from the first network.

It should be noted that step S1220 is similar to step S420. For brevity, details are not described herein.

S1230: The UE sends a mobility registration request message to an AMF network element, and correspondingly, the AMF network element receives the mobility registration request message.

Specifically, a link establishment cause value carried in the mobility registration request message is of an emergency registration (EMC) type. A network side (a 5G network or an NR network) finds, based on the link establishment cause value carried in the mobility registration request message, that this mobility registration procedure is initiated for an emergency service. The network side (the 5G network or the NR network) may determine not to reject the UE and to directly switch to an emergency registered state.

S1240: The AMF network element sends a mobility registration accept message to the UE, and correspondingly, the UE receives the mobility registration accept message.

Specifically, the mobility registration accept message includes emergency registration identification information, and the emergency registration identification information identifies that the network side is in the emergency registered state.

According to the foregoing technical solution, the terminal device sends second indication information to a mobility management network element of the second network, where the second indication information indicates that the terminal device is in the emergency registered state, and the second network determines, based on the second indication information, to enter the emergency registered state, to achieve a registration state match between the network side and the terminal device.

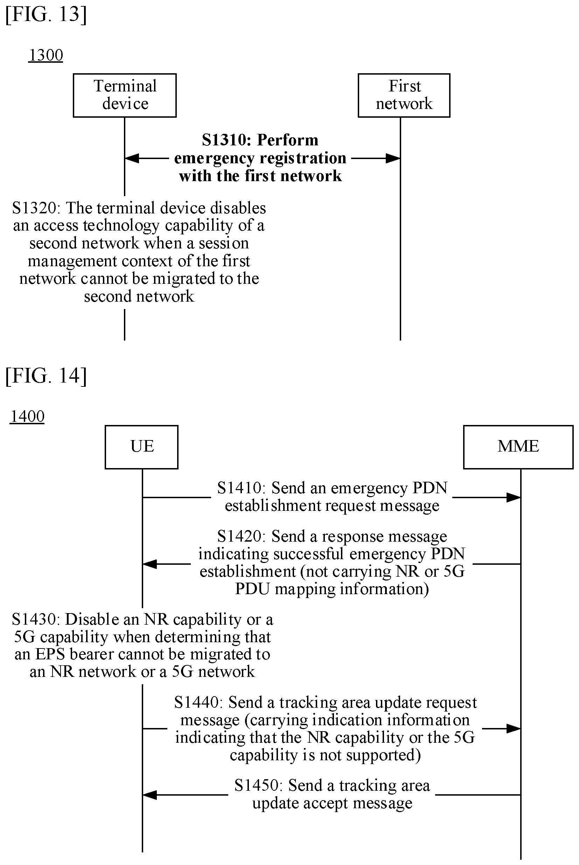

FIG. 13 is a schematic flowchart of a communication method 1300 according to another embodiment of this application. As shown in FIG. 13, the method may include at least the following steps.

S1310: A terminal device performs emergency registration with a first network.

It should be noted that step S1310 is similar to step S310. For brevity, details are not described herein.

S1320: The terminal device disables an access technology capability of a second network when a session management context of the first network cannot be migrated to the second network. "Cannot be migrated" may be understood as "cannot be mapped" or "cannot be moved." It should be understood that this is not limited in this embodiment of this application.

Specifically, the access technology capability may be any one of a 5G capability, an NR capability, or an LTE capability.

It should be noted that, that the session management context of the first network cannot be migrated to the second network may be understood as the following two cases.

Case 1: There is no communication interface between a first mobility management network element and a mobility management network element of the first network.

For example, there is no N26 interface between the first mobility management network element and the mobility management network element of the first network, or neither the first mobility management network element nor the mobility management network element of the first network supports the N26 interface.

Case 2: The second network is not equivalent to the first network.

For example, in a possible implementation, the first network and the second network may be different PLMNs.

For example, the first network may be China Mobile, and the second network may be China Unicom or China Telecom.

For another example, the first network may be China Unicom, and the second network may be China Mobile or China Telecom.

For another example, the first network may be China Telecom, and the second network may be China Mobile or China Unicom.

For example, in a possible implementation, the first network and the second network may be a same PLMN of different access technologies. The access technology may be any one of the following: an LTE system, an NR system, or a 5G system.

For example, the first network may be a PLMN whose access technology is an LTE system, and the second network may be a PLMN whose access technology is a 5G system or a PLMN whose access technology is an NR system.

For another example, the first network may be a PLMN whose access technology is a 5G system or a PLMN whose access technology is an NR system, and the second network may be a PLMN whose access technology is an LTE system.

It should be understood that the foregoing examples are merely for description, and are not limited in embodiments of this application.

It should be noted that, if the access technology of the first network is an LTE system, that the session management context of the first network cannot be migrated to the second network may be understood as that an EPS bearer of the first network cannot be migrated to the second network. "Cannot be migrated" may be understood as "cannot be mapped" or "cannot be moved." It should be understood that this is not limited in this embodiment of this application.

For example, if the access technology of the second network is an LTE system, the terminal device disables the LTE capability when the terminal device determines that the EPS bearer of the first network cannot be migrated to the second network (the LTE system).

For example, if the access technology of the second network is an NR system, the terminal device disables the NR capability when the terminal device determines that the EPS bearer of the first network cannot be migrated to the second network (the NR system).

It should be further noted that, if the access technology of the first network is an NR system or a 5G system, that the session management context of the first network cannot be migrated to the second network may be understood as that a PDU session of the first network cannot be migrated to the second network. "Cannot be migrated" may be understood as "cannot be mapped" or "cannot be moved." It should be understood that this is not limited in this embodiment of this application.

For example, if the access technology of the second network is an LTE system, the terminal device disables the LTE capability when the terminal device determines that the PDU session of the first network cannot be migrated to the second network (the LTE system).

For example, if the access technology of the second network is an NR system, the terminal device disables the NR capability when the terminal device determines that the PDU session of the first network cannot be migrated to the second network (the NR system).

It should be understood that disabling the LTE capability described above may be understood as "Disable LTE", and disabling the NR capability may be understood as "Disable NR". "Disabling" may alternatively be "prohibiting" or "preventing". This is not limited in this embodiment of this application.

Optionally, in a possible implementation, the method may further include: The terminal device enables the access technology capability of the second network when determining that an emergency service ends.

For example, if the access technology of the second network is an LTE system, the terminal device enables the LTE capability when determining that the emergency service ends.

For example, if the access technology of the second network is an NR system, the terminal device enables the NR capability when determining that the emergency service ends.

It should be understood that enabling the LTE capability described above may be understood as "Enable LTE", and disabling the NR capability may be understood as "Enable NR". "Enabling" may alternatively be "allowing" or "executing". This is not limited in this embodiment of this application.

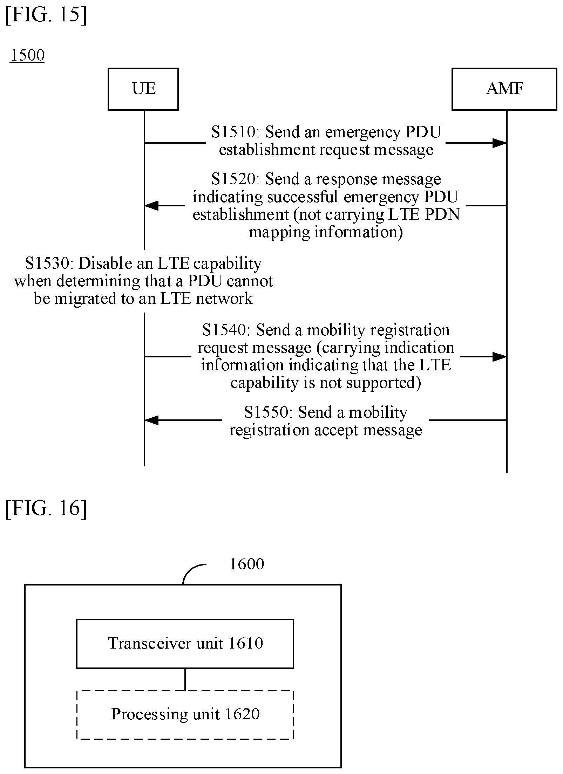

Specific embodiments of the communication method 1300 described above are described in detail below with reference to FIG. 14 and FIG. 15.

FIG. 14 is a schematic flowchart of a communication method 1400 according to an embodiment of this application. As shown in FIG. 14, the method may include the following steps.

It should be noted in advance that the embodiment shown in FIG. 14 is described by using an example in which a first network is a network whose access technology is an LTE system and a second network is a network whose access technology is a 5G system or an NR system. For a case in which the first network and the second network are different PLMNs (for example, the first network is an LTE PLMN 1, and the second network is an LTE PLMN 2), refer to the embodiment shown in FIG. 14. For brevity, details are not described herein.

S1410: UE sends an emergency PDN establishment request message to an MME network element, and correspondingly, the MME network element receives the emergency PDN establishment request message.

S1420: The MME network element sends, to the UE, a response message indicating successful emergency PDN establishment, and correspondingly, the UE receives the response message indicating the successful emergency PDN establishment.

Optionally, the response message indicating the successful emergency PDN establishment does not carry PDU mapping information of a second network (for example, a 5G network or an NR network).

S1430: The UE disables a 5G capability or an NR capability when an EPS bearer of an LTE network cannot be migrated to the NR network or the 5G network.

S1440: The UE sends a tracking area update request message to the MME network element, and correspondingly, the MME network element receives the tracking area update request message.

Specifically, the tracking area update request message carries indication information, and the indication information indicates that the UE does not support the 5G capability or the NR capability. "The UE does not support the 5G capability or the NR capability" may be understood as that the UE can perform reselection and handover only in the LTE network, and cannot perform reselection or handover to the 5G network or the NR network.

S1450: The MME network element sends a tracking area update accept message to the UE, and correspondingly, the UE receives the tracking area update accept message.

FIG. 15 is a schematic flowchart of a communication method 1500 according to an embodiment of this application. As shown in FIG. 15, the method may include the following steps.

It should be noted in advance that the embodiment shown in FIG. 15 is described by using an example in which a first network is a network whose access technology is a 5G system or an NR system and a second network is a network whose access technology is an LTE system. For a case in which the first network and the second network are different PLMNs (for example, the first network is an NR PLMN 1, and the second network is an NR PLMN 2), refer to the embodiment shown in FIG. 15. For brevity, details are not described herein.

S1510: UE sends an emergency PDU establishment request message to an AMF network element, and correspondingly, the AMF network element receives the emergency PDU establishment request message.

S1520: The AMF network element sends, to the UE, a response message indicating successful emergency PDU establishment, and correspondingly, the UE receives the response message indicating the successful emergency PDU establishment.

Optionally, the response message indicating the successful emergency PDU establishment does not carry PDN mapping information of a second network (for example, an LTE network).

S1530: The UE disables an LTE capability when a PDU of an NR network or a 5G network cannot be migrated to the LTE network.

S1540: The UE sends a mobility registration request message to the AMF network element, and correspondingly, the AMF network element receives the mobility registration request message.

Specifically, the mobility registration request message carries indication information, and the indication information indicates that the UE does not support the LTE capability. "The UE does not support the LTE capability" may be understood as that the UE can perform reselection and handover only in the 5G network or the NR network, and cannot perform reselection or handover to the LTE network.

S1550: The AMF network element sends a mobility registration accept message to the UE, and correspondingly, the UE receives the mobility registration accept message.

According to the foregoing technical solution, the terminal device disables an access technology capability of the second network based on the fact that the session management context of the first network cannot be migrated to the second network, to achieve a state match between the terminal device and a network side.

It should be understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that, some message names, such as the mobility registration request message or the initial registration request message, are involved in embodiments of this application. It should be understood that the message names do not limit the protection scope of embodiments of this application.

It may be further understood that, in the foregoing method embodiments, the methods and operations implemented by the terminal device may alternatively be implemented by a component (for example, a chip or a circuit) of the terminal device. In addition, the methods and the operations implemented by the first mobility management network element may alternatively be implemented by a component (for example, a chip or a circuit) of the first mobility management network element. This is not limited. In correspondence to the method provided in the foregoing method embodiments, an embodiment of this application further provides a corresponding communication apparatus. The apparatus includes a corresponding module configured to perform the foregoing method embodiments. The module may be software, hardware, or a combination of the software and the hardware. It may be understood that the technical features described in the method embodiments are also applicable to the following apparatus embodiments.

It should be understood that the terminal device and the first mobility management network element may perform a part or all of steps in the foregoing embodiments. These steps or operations are merely examples. In embodiments of this application, other operations or variations of various operations may be further performed. In addition, the steps may be performed in another sequence different from that presented in the foregoing embodiments, and not all the operations in the foregoing embodiments may be performed.

The foregoing describes in detail the communication methods provided in embodiments of this application with reference to FIG. 3 to FIG. 15. The following describes in detail the communication apparatuses provided in embodiments of this application with reference to FIG. 16 to FIG. 18. It should be understood that descriptions of apparatus embodiments correspond to the descriptions of the method embodiments. Therefore, for content that is not described in detail, refer to the foregoing method embodiments. For brevity, some content is not described again.

FIG. 16 is a block diagram of a communication apparatus according to an embodiment of this application. An apparatus 1600 includes a transceiver unit 1610, and the transceiver unit 1610 may be configured to implement a corresponding communication function. The transceiver unit 1610 may alternatively be referred to as a communication interface or a communication unit.

Optionally, the apparatus 1600 may further include a processing unit 1620, and the processing unit 1620 may be configured to perform data processing.

Optionally, the apparatus 1600 further includes a storage unit. The storage unit may be configured to store instructions and/or data. The processing unit 1620 may read the instructions and/or the data in the storage unit, so that the apparatus implements actions of different terminal devices in the foregoing method embodiments, for example, actions of the terminal device and the first mobility management network element.

The apparatus 1600 may be configured to perform actions performed by the terminal device or the first mobility management network element in the foregoing method embodiments. In this case, the apparatus 1600 may be the terminal device or the first mobility management network element, or a component of the terminal device or a component of the first mobility management network element. The transceiver unit 1610 is configured to perform a sending/receiving-related operation of the terminal device or the first mobility management network element in the foregoing method embodiments. The processing unit 1620 is configured to perform a processing related operation of the terminal device or the first mobility management network element in the foregoing method embodiments.

For example, the terminal device may be UE, and the first mobility management network element may be an AMF network element or an MME network element.

It should be further understood that the apparatus 1600 is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1600 may be specifically the terminal device or the first mobility management network element in the foregoing embodiments, and may be configured to perform the procedures and/or steps corresponding to the terminal device or the first mobility management network element in the foregoing method embodiments. Alternatively, the apparatus 1600 may be specifically the terminal device or the first mobility management network element in the foregoing embodiments, and may be configured to perform the procedures and/or steps corresponding to the terminal device or the first mobility management network element in the foregoing method embodiments. To avoid repetition, details are not described herein again.

The apparatus 1600 in the foregoing solutions has a function of implementing corresponding steps performed by the terminal device or the first mobility management network element in the foregoing methods, or the apparatus 1600 in the foregoing solutions has a function of implementing corresponding steps performed by the terminal device or the first mobility management network element in the foregoing methods. The function may be implemented by hardware, or may be implemented by hardware executing corresponding software. The hardware or software includes one or more modules corresponding to the foregoing function. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform sending and receiving operations and related processing operations in the method embodiments.

In addition, the transceiver unit 1610 may alternatively be a transceiver circuit (for example, may include a receiving circuit and a sending circuit), and the processing unit may be a processing circuit.

It should be noted that the apparatus in FIG. 16 may be a network element or a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

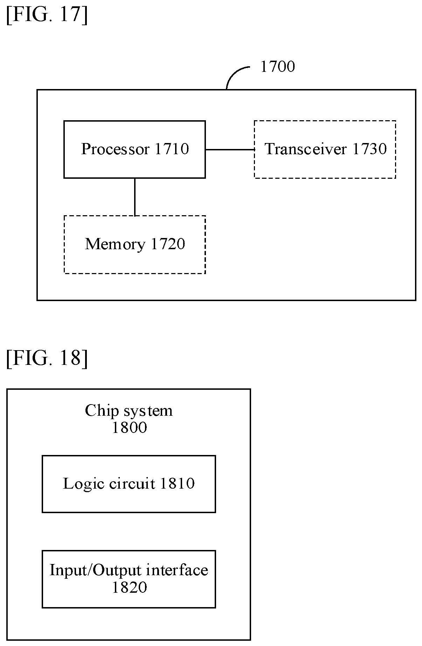

As shown in FIG. 17, an embodiment of this application provides another communication apparatus 1700. The apparatus 1700 includes a processor 1710. The processor 1710 is coupled to a memory 1720. The memory 1720 is configured to store a computer program or instructions and/or data. The processor 1710 is configured to: execute the computer program or the instructions stored in the memory 1720, or read the data stored in the memory 1720, to perform the methods in the foregoing method embodiments.

Optionally, there are one or more processors 1710.

Optionally, there are one or more memories 1720.

Optionally, the memory 1720 and the processor 1710 may be integrated together or separately disposed.

Optionally, as shown in FIG. 17, the apparatus 1700 further includes a transceiver 1730. The transceiver 1730 is configured to receive and/or send signals. For example, the processor 1710 is configured to control the transceiver 1730 to receive and/or send signals.

In a solution, the apparatus 1700 is configured to implement operations performed by the terminal device or the first mobility management network element in the foregoing method embodiments.

For example, the processor 1710 is configured to execute the computer program or the instructions stored in the memory 1720, to implement related operations of the terminal device or the first mobility management network element in the foregoing method embodiments, for example, the method of the terminal device in any one of the embodiments shown in FIG. 3 to FIG. 15, or the method of the first mobility management network element in any one of the embodiments shown in FIG. 3 to FIG. 15.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 18 shows a chip system 1800 according to an embodiment of this application. The chip system 1800 (or may be referred to as a processing system) includes a logic circuit 1810 and an input/output interface (input/output interface) 1820.

The logic circuit 1810 may be a processing circuit in the chip system 1800. The logic circuit 1810 may be coupled to a storage unit, and invoke instructions in the storage unit, so that the chip system 1800 can implement the methods and functions in embodiments of this application. The input/output interface 1820 may be an input/output circuit in the chip system 1800, and outputs information processed by the chip system 1800, or inputs to-be-processed data or signaling information to the chip system 1800 for processing.

In a solution, the chip system 1800 is configured to implement operations performed by the terminal device or the first mobility management network element in the foregoing method embodiments.

For example, the logic circuit 1810 is configured to implement a processing-related operation of the terminal device in the foregoing method embodiments, for example, a processing-related operation of the first mobility management network element in any one of the embodiments shown in FIG. 3 to FIG. 15. The input/output interface 1820 is configured to implement a sending and/or receiving-related operation of the terminal device in the foregoing method embodiments, for example, a sending and/or receiving-related operation of the first mobility management network element in any one of the embodiments shown in FIG. 3 to FIG. 15.

An embodiment of this application further provides a computer-readable storage medium. The computer-readable storage medium stores computer instructions used to implement the method performed by the terminal device or the first mobility management network element in the foregoing method embodiments.

For example, when a computer program is executed by a computer, the computer is enabled to implement the method performed by the terminal device or the first mobility management network element in the foregoing method embodiments.

An embodiment of this application further provides a computer program product, including instructions. When the instructions are executed by a computer, the method performed by the terminal device or the first mobility management network element in the foregoing method embodiments is implemented.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
performing emergency registration with a first network;
reselecting to a second network from the first network; and
sending a first request message or a second request message to a first mobility management network element, wherein the first mobility management network element is in the second network, the first request message is used to request emergency registration with the second network, and the second request message is
used to request initial registration with the second network.

2. The method according to claim 1, wherein the sending the first request message or the second request message to the first mobility management network element comprises:
sending the first request message or the second request message to the first mobility management network element when the first network and the second network
cannot communicate with each other.

3. The method according to claim 2, wherein that the first network and the second network cannot communicate with each other comprises:
the second network is not equivalent to the first network; or
there is no communication interface between the first mobility management
network element and a mobility management network element of the first network.

4. The method according to any one of claims 1 to 3, wherein the sending the first request message or the second request message to the first mobility management network element comprises:
sending the first request message to the first mobility management network element
when the terminal device performs an emergency service.

5. The method according to any one of claims 1 to 3, wherein the sending the first request message or the second request message to the first mobility management network element comprises:
sending the second request message to the first mobility management network
element when the terminal device does not perform an emergency service.

6. The method according to any one of claims 1 to 5, wherein before the sending the first request message or the second request message to the first mobility management network element, the method further comprises:
entering a deregistered state.

7. A communication method, comprising:
performing emergency registration with a first network;
reselecting to a second network from the first network;
obtaining first indication information, wherein the first indication information indicates a terminal device to enter a non-emergency registered state; and
determining, based on the first indication information, to send a third request message to a first mobility management network element, wherein the first mobility management network element is in the second network, and the third request
message is used to request initial registration with the second network.

8. The method according to claim 7, wherein before the obtaining the first indication information, the method further comprises:
sending a fourth request message to the first mobility management network element, wherein the fourth request message is used to request mobility registration with the second network; and
the obtaining the first indication information comprises:
receiving a first response message from the first mobility management network element, wherein the first response message comprises the first indication information.

9. The method according to any one of claims 1 to 3, wherein the first network and the second network are different public land mobile networks PLMNs.

10. The method according to any one of claims 1 to 4, wherein the first network and the second network are a same PLMN of different technologies, wherein
the technology comprises any one of the following:
a long term evolution LTE system, a 5th generation 5G system, or a new radio NR system.

11. A communication method, wherein the method comprises:
performing emergency registration with a first network;
reselecting to a second network from the first network; and
sending a fifth request message to a first mobility management network element, wherein the first mobility management network element is in the second network, the fifth request message is used to request mobility to the second network, the fifth request message comprises second indication information, and the second indication information indicates that a registration status of the terminal device is an emergency registered state.

12. The method according to claim 11, wherein that the fifth request message comprises the second indication information comprises:
the fifth request message comprises the second indication information when the first network and the second network cannot communicate with each other.

13. The method according to claim 12, wherein that the first network and the second network cannot communicate with each other comprises:
the second network is not equivalent to the first network; or
there is no communication interface between the first mobility management network element and a mobility management network element of the first network.

14. The method according to any one of claims 11 to 13, wherein the method further comprises:
receiving third indication information from the first mobility management network element, wherein the third indication information indicates that the second network
is in the emergency registered state.

15. A communication method, wherein the method comprises:
performing emergency registration with a first network; and
disabling an access technology capability of a second network when a session management context of the first network cannot be migrated to the second network, wherein the access technology capability comprises any one of the following:
an LTE capability, an NR capability, or a 5G capability.

16. The method according to claim 15, wherein that the session management context of the first network cannot be migrated to the second network comprises:
the second network is not equivalent to the first network; or
there is no communication interface between a first mobility management network element and a mobility management network element of the first network.

17. The method according to claim 15 or 16, wherein the disabling the access technology capability of the second network comprises:
disabling the LTE capability when an access technology of the second network is an LTE system; or
disabling the NR capability or the 5G capability when an access technology of the second network is an NR system or a 5G system.

18. The method according to any one of claims 15 to 17, wherein the method further comprises:
enabling the access technology capability of the second network when determining that an emergency service ends.

19. The method according to any one of claims 1 to 18, wherein the first network and the second network are different PLMNs.

20. The method according to any one of claims 1 to 18, wherein the first network and the second network are a same PLMN of different access technologies, wherein the access technology comprises any one of the following:
an LTE system, a 5G system, or an NR system.

21. A communication method, comprising:
receiving a fourth request message from a terminal device, wherein the fourth request message is used to request mobility registration with a second network;
sending a first response message to the terminal device, wherein the first response message comprises first indication information, and the first indication information indicates the terminal device to enter a non-emergency registered state; and
receiving a third request message from the terminal device, wherein the third request message is used to request initial registration with the second network.

22. The method according to claim 21, wherein the method further comprises:
sending a second response message to the terminal device, wherein the second response message indicates that the initial registration with the second network succeeds.

23. A communication method, comprising:
receiving a fifth request message from a terminal device, wherein the fifth request message is used to request mobility to a second network, the fifth request message comprises second indication information, and the second indication information indicates that a registration status of the terminal device is an emergency registered state; and
determining, based on the second indication information, that the second network enters the emergency registered state.

24. The method according to claim 23, wherein the method further comprises: sending third indication information to the terminal device, wherein the third indication information indicates that the second network is in the emergency registered state.

25. A communication apparatus, comprising a unit configured to perform the method according to any one of claims 1 to 6, a unit configured to perform the method according to any one of claims 7 to 10, a unit configured to perform the method according to any one of claims 11 to 14, or a unit configured to perform the method according to any one of claims 15 to 20.

26. A communication apparatus, comprising a unit configured to perform the method according to claims 21 or 22, or comprising a unit configured to perform the method according to claim 23 or 24.

27. A computer-readable storage medium, storing a computer program or instructions, wherein when the computer program or the instructions are executed by a processor, the method according to any one of claims 1 to 6 is performed, the method according to any one of claims 7 to 10 is performed, the method according to any one of claims 11 to 14 is performed, the method according to any one of claims 15 to 20 is performed, the method according to claim 21 or 22 is performed, or the method according to claim 23 or 24 is performed.

28. A computer program product comprising instructions, wherein when the computer program product runs on a computer, the method according to any one of claims 1 to 6 is performed, the method according to any one of claims 7 to 10 is performed, the method according to any one of claims 11 to 14 is performed, the method according to any one of claims 15 to 20 is performed, the method according to claim 21 or 22 is performed, or the method according to claim 23 or 24 is performed.

29. A chip system, comprising a processor, configured to invoke a computer program or instructions from a memory and run the computer program or the instructions, so that a communication apparatus on which the chip system is installed implements the method according to any one of claims 1 to 6, the method according to any one of claims 7 to 10, the method according to any one of claims 11 to 14, the method according to any one of claims 15 to 20, the method according to claim 21 or 22, or the method according to claim 23 or 24.
